# EUROPÄISCHE PATENTSCHRIFT

(11) **EP 1 769 356 B1**
(45) Veröffentlichungstag und Bekanntmachung des Hinweises auf die Patenterteilung: **19.03.2008**
(21) Anmeldenummer: 05761737.5
(22) Anmeldetag: 18.07.2005
(51) Int. Cl.: G06F 11/16

(54) **DEZENTRALE FEHLERTOLERANTE TAKTGENERIERUNG IN VLSI CHIPS**
DECENTRALISED FAULT-TOLERANT CLOCK PULSE GENERATION IN VLSI CHIPS
GENERATION DECENTRALISEE DE SIGNAL D'HORLOGE A TOLERANCE DE FAUTES DANS DES PUCES VLSI

(30) Priorität: 19.07.2004 AT 12232004
(43) Veröffentlichungstag der Anmeldung: 04.04.2007
(73) Patentinhaber: Technische Universität Wien, 1040 Wien (AT)
(72) Erfinder: SCHMID, Ulrich, A-1130 Wien (AT); STEININGER, Andreas, A-1230 Wien (AT)
(74) Vertreter: Matschnig, Franz
(86) Internationale Anmeldenummer: PCT/AT2005/000280
(87) Internationale Veröffentlichungsnummer: WO 2006/007619

(56) Entgegenhaltungen:
- EP-A- 0 905 623
- US-A- 4 584 643
- OFEK Y ED - INSTITUTE OF ELECTRICAL AND ELECTRONICS ENGINEERS: "Generating a fault tolerant global clock in a high speed distributed system" INTERNATIONAL CONFERENCE ON DISTRIBUTED COMPUTING SYSTEMS. NEWPORT BEACH, JUNE 5 - 9, 1989, PROCEEDINGS OF THE INTERNATIONAL CONFERENCE ON DISTRIBUTED COMPUTING SYSTEMS, WASHINGTON, IEEE COMP. SOC. PRESS, US, Bd. CONF. 9, 5. Juni 1989 (1989-06-05), Seiten 218-226, XP010016544 ISBN: 0-8186-1953-8
- SURI N ET AL: "SYNCHRONIZATION ISSUES IN REAL-TIME SYSTEMS" PROCEEDINGS OF THE IEEE, IEEE. NEW YORK, US, Bd. 82, Nr. 1, Januar 1994 (1994-01), Seiten 41-53, XP000435880 ISSN: 0018-9219
- OLSON A ET AL: "FAULT-TOLERANT CLOCK SYNCHRONIZATION FOR DISTRIBUTED SYSTEMS USING CONTINUOUS SYNCHRONIZATION MESSAGES" 25TH. INTERNATIONAL SYMPOSIUM ON FAULT TOLERANT COMPUTING. DIGEST OF PAPERS. PASADENA, JUNE 27 - 30, 1995, INTERNATIONAL SYMPOSIUM ON FAULT TOLERANT COMPUTING, LOS ALAMITOS, IEEE COMP. SOC. PRESS, US, Bd. SYMP. 25, 27. Juni 1995 (1995-06-27), Seiten 154-163, XP000597788 ISBN: 0-7803-2965-1
- FURA D ET AL: "Design and validation of a fault-tolerant distributed clock" BOEING AEROSPACE COMPANY,SEATTLE WA 98124, 23. Mai 1988 (1988-05-23), Seiten 495-502, XP010076929

## Beschreibung

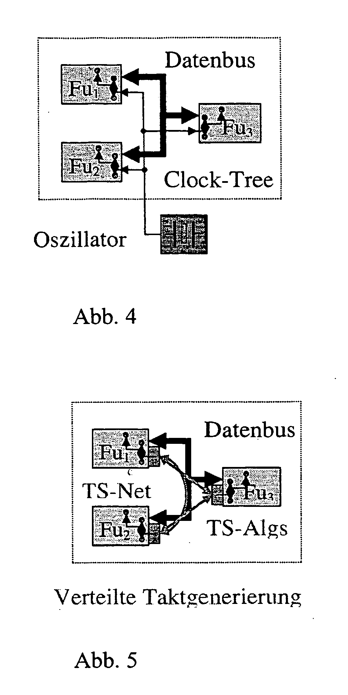

### I. ÜBERBLICK (siehe dazu auch Abb. 4 und Abb. 5)

Die zukünftige Entwicklung digitaler VLSI-Chips ist durch ständig höher werdende Integrationsdichte, Komplexität und Taktfrequenz gekennzeichnet. Die Bereitstellung des vom synchronen Design-Paradigma geforderten synchronen Taktes in allen Funktionseinheiten (*Fu*) wird dadurch jedoch immer schwieriger:
- Signale brauchen einen ganzen Taktzyklus (und mehr), um alle Funktionseinheiten am Chip zu erreichen.
- Erfordert Immer aufwendigere Verfahren zur Skew-Optimierung des Clock-Trees.
- Clock-Tree & Buffer konsumieren viel Leistung & Fläche und erzeugen signifikante Versorgungsprobleme und Störstrahlung.
- Maximale Taktfrequenz kann erst nach Place & Route bestimmt werden (und muß konservativ gewählt werden).

Dazu kommt, daß das Taktsignal ein klassischer "single point of failure" ist:
- Externe Quarze sind teuer, groß und mechanisch empfindlich. Eine Variante mit Quarzen ist z.B. beschrieben in OFEK Y ED - Institute of Electrical and Electronic Engineers: "Generating a fault tolerant global clock in a high speed distributed system", International Conference on Distributed Computing Systems. New Port Beach, June 5 - 9, 1989, PROCEEDINGS OF THE INTERNATIONAL CONFERENCE ON DISTRIBUTED COMPUTING SYSTEMS, WASHINGTON, IEEE COMP: SOC. PRESS, US, Bd. CONF. 9, 5. Juni 1989, Seiten 218 - 226.
- Jeder (auch transiente) Fehler im Clock-Tree führt zu einem Systemausfall.

Die Tatsache, daß mittlerweile die Leitungsverzögerungen die Schaltzeiten in VLSI Chips dominieren, erlaubt es, eine aus dem Bereich der fehlertoleranten verteilten Systeme kommende alternative Methode zur Taktgenerierung ins Auge zu fassen: *Uhrensynchronisation.* Konzeptuell wird hier allen (bzw. ausreichend vielen) Funktionseinheiten eine eigene lokale Taktgenerierungseinheit *(TS-Alg)* zugeordnet, die den lokalen Takt *(Micro-Ticks)* für die jeweilige Funktionseinheit liefert. Alle TS-Algs sind untereinander voll verbunden und verwenden dieses *TS-Net,* um ihre lokalen Micro-Ticks untereinander zu synchronisieren.

Die Synchronisationsgenauigkeit π = π(Θ) des verwendeten Verfahrens hängt lediglich vom Verhältnis Θ zwischen langsamstem und schnellstem Pfad im TS-Net ab ("quasi-delayinsensitive"). Durch das Nachschalten eines (programmierbaren) Teilers ÷π können somit aus den Micro-Ticks *Macro-Ticks* gewonnen werden, die dem gewünschten global synchronen Takt entsprechen. Vorteile des Verfahrens:
- Der Chip ist selbsttaktend, braucht also keinen externen Oszillator. Anders als bei einfachen Ringoszillatoren wird der gesamte Chip in die Taktgenerierung mit einbezogen, was die Frequenzstabilität a priori verbessert. Eine zusätzliche Temperaturkompensation kann ebenfalls realisiert werden.
- Der Chip läuft automatisch mit der höchsten möglichen Frequenz, die abhängig von den durch das Place & Route des TS-Net erreichten Delays und den Betriebsbedingungen ist. Durch geeignete Parametrisierung der TS-Algs können sogar die langsamsten Pfade "wegmaskiert" werden.
- Das synchrone Paradigma kann nicht nur beim Design der lokalen Funktionseinheiten (basierend auf Micro-Ticks), sondern auch bei der globalen Kommunikation (via Macro-Ticks) zwischen Fu's beibehalten werden.
- Das Verfahren toleriert (beweisbar korrekt) eine parametrisierbare Anzahl transienter und permanenter Fehler im TS-Net.
- Die Anzahl der TS-Algs kann je nach Erfordernissen optimal gewählt werden, wodurch der Overhead (Fläche, ...) der Taktgenerierung kontrolliert werden kann
- Das Verfahren erlaubt auch eine saubere Lösung des synchronen Reset-Problems, das bei sehr großen Chips mit hohen Taktraten schwierig zu beherrschen ist.

### II. DETAILDARSTELLUNG

**Kurzfassung** - Angesichts der zunehmenden Probleme mit der Taktverteilung in klassischen synchronen VLSI Chips wird ein neues Verfahren vorgeschlagen, das ohne externe Taktquellen (Oszillatoren, Quarze - siehe Abb. 4 und 5) auskommt, es aber dennoch erlaubt, das synchrone Design-Paradigma beizubehalten. Das Prinzip des Verfahrens besteht darin, mit Hilfe eines asynchron implementierten verteilten Algorithmus lokale Taktsignale für "Inselbereiche" (= ein oder mehrere räumlich beisammenliegende Funktionseinheiten) am Chip zu erzeugen, deren garantierte Synchronisationsgenauigkeit auch die Generierung eines systemweit globalen Taktes erlaubt. Durch die Verteiltheit des Algorithmus, dessen Fehlertoleranz und dessen Zeitfreiheit kann ein robuster und fehlertoleranter Takt zur Verfügung gestellt werden, der sich flexibel an Veränderungen in den Zeitparametem anpasst (andere Technologie bzw. Betriebsbedingungen) und schnelle synchrone Kommunikation auch zwischen räumlich weit entfernten Inselbereichen zuläßt. Die hier beschriebene Methode unterscheidet sich also vom GALS-Ansatz also dadurch, dass die globale Kommunikation nicht asynchron erfolgt und dass es keine mehrfachen lokalen Taktquellen gibt.

### 1. MOTIVATION

Die Ausbreitungsgeschwindigkeit elektrischer Signale in Schaltungen ist im Wesentlichen durch zwei Effekte begrenzt: Die Lichtgeschwindigkeit und so genannte RC-Verzögerungen. In den typischerweise verwendeten Medien beträgt die Lichtgeschwindigkeit etwa 2/3 der Vakuumlichtgeschwindigkeit, also 2.10⁸ m/s oder 20cm/ns. Die RC-Verzögerungen werden durch parasitäre Widerstände und Kapazitäten verursacht, die zusammen so genannte RC-Glieder bilden. Diese RC-Glieder wiederum sind nichts anderes als Tiefpassfilter, die eine Verflachung von Signalflanken bewirken. Diese Verflachung im Amplitudenbereich bildet sich im Zeitbereich schließlich als Signalverzögerung ab, wobei die Verzögerungszeit in guter Näherung dem Produkt aus Widerstand und Kapazität entspricht.

Während die Lichtgeschwindigkeit also offenbar eine unverrückbare physikalische Grenze für die Ausbreitungsgeschwindigkeit von Signalen darstellt, sind bezüglich der RC-Verzögerungen Optimierungen möglich. Der Verringerung der parasitären Widerstände und Kapazitäten wird daher bei der Entwicklung neuer Technologien stets besonderes Augenmerk geschenkt, dennoch stellen derzeit die RC-Verzögerungen das eigentliche Geschwindigkeitslimit dar.

Nimmt man nun dennoch optimistisch an, dass die RC-Verzögerungen so weit durch Optimierungen beseitigt werden könnten, dass die harte physikalische Grenze der Lichtgeschwindigkeit erreicht wird, so würde ein Signal 0,1ns benötigen, um entlang der Kante eines 2cm großen Microchips zu propagieren. Bei den derzeit üblichen Taktraten in der Größenordnung von 10GHz entspricht dies bereits einer vollen Taktperiode. Die International Technology Roadmap for Semiconductors (ITRS) [ITRS02] sagt etwa 25% jährlichen Anstieg der Taktraten voraus, wobei die Abmessungen der Chips im Wesentlichen gleich bleiben werden. In 10 Jahren würde dies bedeuten, dass das Signal bereits mehr als 3 Taktperioden benötigt, um entlang der Kante des Chips zu propagieren. Diese Schätzung vernachlässigt wie erwähnt die RC-Verzögerungen, und gerade bei weit verzweigten Netzen ist die Ausdehnung auch wesentlich länger als die Kantenlänge des Chips; die Situation ist daher noch weitaus kritischer.

Gerade bei der Taktverteilung ist einerseits die physikalische Ausdehnung des Netzes besonders groß und andererseits die Auswirkung von laufzeitbedingten Phasenverschiebungen besonders hoch, daher sind die beschriebenen Probleme hier bereits jetzt massiv zu spüren. Es werden enorme Anstrengungen unternommen [Restle01][Inte102], um das Modell der synchronen Abläufe auf einem Chip noch aufrechterhalten zu können. Letztlich ist es jedoch nur eine Frage der Zeit, bis sich dieses Modell - zumindest in seiner derzeitigen Form - endgültig als nicht mehr haltbare Illusion herausstellt. Während es durchaus geeignete Methoden gibt, um eine definierte Phasenverschiebung im Design zu beherrschen, stellen vor allem die nicht vorhersagbaren - von Typenstreuung, Betriebsbedingungen etc. abhängigen - Variationen des Delay das Hauptproblem dar. Ohne ausreichende Kenntnis der relativen Lage von Signal- und Taktflanken zueinander kommt es zum Auftreten undefinierter logischer Zustände, der so genannten Metastabilität.

Auch bei anderen Signalen als dem Takt stellen sich Laufzeiten als immer problematischer heraus. Während es früher noch einfach möglich war, aufgrund der Gatterverzögerungen im kritischen Pfad die zulässige Taktfrequenz eines Designs in guter Näherung abzuschätzen, sind jetzt die Laufzeiten des Interconnect so dominant, dass eine derartige Abschätzung erst nach Abschluss des Place & Route möglich ist. Dadurch können korrigierende Maßnahmen erst sehr spät im Design-Prozess gesetzt werden, was die Design-Zyklen empfindlich langsamer und teurer macht.

Auch die Reset-Leitung bedarf einer besonderen Beachtung: Wird der Reset beim Systemstart etwa während eines bestimmten Taktzyklus *k* deaktiviert, so wird dies von den betroffenen Funktionseinheiten noch im gleichen Taktzyklus wahrgenommen, und diese reagieren entsprechend. Nimmt nun aufgrund von Signalverzögerungen eine Funktionseinheit den Reset erst im Taktzyklus *k*+1 wahr, so kann diese Asynchronität zu unvorhergesehenen Effekten beim Systemstart führen. Im Zuge von Fehlerinjektionsexperimenten [Scherrer02] wurde festgestellt, dass Prozessorsysteme sehr empfindlich auf eine inkonsistente Interpretation des Reset reagieren können.

Insgesamt ist daher abzusehen, dass angesichts der immer dominanter werdenden Einflüsse von Laufzeiten die Synchronität der Abläufe auf einem VLSI-Chip bei weiterhin steigenden Taktraten nicht mehr allein durch konstruktive und technologische Maßnahmen sichergestellt werden kann. Es sind entweder Alternativen zum synchronen Design-Paradigma gefragt, oder aber methodische Lösungen wie etwa eine weiter gefasste Definition von Synchronität.

Gleichzeitig ist abzusehen, dass mit steigenden Taktraten, kleineren Spannungshüben und kleineren Strukturen auf dem Chip die Fehlerraten ansteigen werden [Const02] [Salim01]. Neben anderen Maßnahmen zur Erhöhung der Fehlertoleranz wird dies auch vermehrt den Einsatz von fehlertolerantem Takt erfordern. In besonders sicherheitskritischen Anwendungen (Flugzeug [Truong97]) oder Anwendungen mit extrem langer Mission time (Raumfahrt [Gaisler02]) ist dies heute schon der Fall und erfordert dort z.T. signifikante Overheads. Eine Lösung der Synchronitätsproblematik sollte also den Aspekt der Fehlertoleranz von Anfang an mit berücksichtigen.

### 2. STAND DER TECHNIK & TRENDS

### 2.1 Zum Begriff der Synchronisation

Der Begriff Synchronisation wird in unterschiedlichen Zusammenhängen mit unterschiedlicher Bedeutung verwendet. Im Sinne einer Klärung der Begriffswelt sollen im Folgenden die beiden wichtigsten Interpretationen des Begriffes diskutiert werden:
*Phasensynchronität* stellt die höchste Stufe der Synchronisation dar. Zwei oder mehrere Taktsignale müssen so genau übereinstimmen, dass ihre Phasenverschiebung minimal bzw. möglichst konstant ist. Qualitätsmaß für die Synchronisation ist dementsprechend die maximale Phasenabweichung in Grad. Phasensynchronität ist erforderlich, wenn z.B. mehrere logische Schaltungen im lock-step Betrieb arbeiten sollen. Das klassische synchrone Design geht implizit von Phasensynchronität aus, und genau diese lässt sich angesichts der Dominanz von Laufzeiten nicht mehr aufrechterhalten. Auch wenn die betrachteten Taktsignale in diesem Fall aus derselben Quelle stammen, wird ihre relative Phasenlage durch Laufzeiten und Skew verzerrt.
*Zeit-Synchronität (Uhrensynchronität)* bezieht sich auf die Übereinstimmung verteilter Uhren. Die zu synchronisierenden Uhrzeiten werden üblicherweise von vollständig unkorrelierten lokalen Taktsignalen abgeleitet, und die Synchronisation erfolgt durch gezieltes Weglassen bzw. Einfügen von Taktimpulsen. Die Qualität der Synchronisation wird anhand der maximalen Abweichung zweier Uhrzeiten bewertet, diese wird auch als Precision bezeichnet. Im Vergleich zur Phasensynchronisation ist hier die Granularität wesentlich weniger fein; es geht nicht um Phasenverschiebungen innerhalb eines hochfrequenten Taktes, sondern um (ganzzahlige!) Abweichungen von lokalen Zählerständen.

Grundsätzlich lässt sich auch eine Zeit-Synchronität nur mit Synchronisationsmaßnahmen erreichen. Die Auswahl von eng tolerierten Quarzen allein etwa wäre nicht ausreichend, da die daraus abgeleiteten lokalen Uhrzeiten bei beliebig langer Beobachtung auch beliebig weit voneinander abweichen können.

### 2.2 Taktverteilung

Die Taktverteilung stellt in aktuellen Designs aufgrund der Vorgaben für Performance und Leistungsaufnahme zunehmend ein Problem dar. Die Forderung nach hohen Taktfrequenzen und die ansteigende Gatteranzahl von Mikrochips implizieren das Ansteigen der Leistungsaufnahme des clock-trees aufgrund der erhöhten Anzahl an Schaltvorgängen und des hohen fan-outs. Das Taktnetzwerk ist typischerweise für 25% bis 50% der Leistungsaufnahme des gesamten Chips verantwortlich [Dobberpuhl92]. Zusätzlich wird durch das Verkürzen der Taktperioden der zulässige Spielraum für den clock-skew (die Differenz zwischen dem Eintreffen des Taktes an zwei unterschiedlichen Komponenten) verkleinert. In modernen Prozessor-Designs muss daher beträchtlicher Aufwand betrieben werden um eine möglichst skew-freie Verteilung des Taktes zu garantieren. Die Taktverteilung erfolgt meist mittels balancierter Bäume (H-Trees, X-Trees) in Zusammenhang mit Netzstrukturen welche einzelne Baumebnen zusammenschließen. Durch diese Vorgehensweise wird versucht die Leitungslänge zu jedem Endknoten und die Bufferanzahl in jedem solchen Pfad möglichst anzugleichen; man spricht dabei vom zero-skew-routing
[Friedman01] [Restle02].

Um den erheblichen fanout des Taktverteilungsnetzwerkes ausreichend "treiben" zu können ist eine Vielzahl von Buffern (mehrere hundert bis mehrere tausend) erforderlich, welche möglichst gleichmäßig über den Chip verteilt sein sollten um den clock-skew gering zu halten. Jeder Buffer besitzt bedingt durch den Herstellungsprozess eine gewisse wenn auch geringe Unschärfe hinsichtlich seiner Treiberstärke und Verzögerungseigenschaften und führt dadurch zu zusätzlichem clock-skew [Restle01]. In modernen Prozessor-Designs werden oft so genannte de-skewing Schaltungen eingefügt. Dabei handelt es sich um programmierbare Verzögerungen welche dazu dienen, Laufzeitvariationen einzelner Buffer des Taktverteilungsnetzwerkes auszugleichen. Die Treiberstärke und damit verbunden die Verzögerungszeit eines Buffers hängen allerdings stark von Betriebsparametern wie der Versorgungsspannung und der Umgebungstemperatur ab. Weiters kann sich der Widerstand einer Leitung z.B. durch Elektromigration ändern, was zu veränderten Laufzeiteigenschaften in diesem Pfad führen kann. Aufgrund der hohen Frequenzen (GHz-Bereich) wird auch der Skin-Effekt (Strom fließt nur auf der Oberfläche des Leiters) zunehmend zum Problem[Chen02]. Der Skin-Effekt bewirkt, dass der Leitungswiderstand und damit die Laufzeiteigenschaften abhängig von der Taktfrequenz variieren.

Die oben aufgezeigte Unschärfe der Parameter des Taktnetzwerks macht es notwendig, große Sicherheitsbereiche für den clock-skew einzuplanen, was zu erheblichen Einbußen bei der maximal zulässigen Taktfrequenz eines VLSI-Chips führt. Darüberhinaus erzeugt das synchrone Schalten der vielen Clock-Buffer beträchtliche Störsignale auf der Versorgungsspannung, Übersprechen und schmalbandige elektromagnetische Störstrahlung, die durch die Antennenwirkung des Clock-Trees beträchtlich sein kann.

### 2.3 Uhrensynchronisation

Bei der Uhrensynchronisation wird in einem Netzwerk aus Knoten ein systemweiter gemeinsamer Zeitbegriff in Form von synchronisierten Uhren (Zählern) eingeführt. Es kann dabei zwischen hardware- und softwarebasierten Ansätzen unterschieden werden, wobei Hardwareimplementierungen im Allgemeinen aufgrund des geringeren Protokoll-Overheads und der damit verbunden geringeren Varianz der Ausführungszeit zu höherer Synchronisationsgenauigkeit führen [Ram90]. Allgemein gilt, dass n > 3f Knoten vorhanden sein müssen um *f* byzantinisch fehlerhafte Knoten tolerieren zu können [DHS86].

### Grundprinzip Uhrensynchronisation:

Jeder Knoten besitzt einen lokalen Taktgenerator welcher einen Zähler inkrementiert, des Weiteren führen alle Knoten lokal ein und denselben Algorithmus aus. Die für den Algorithmus relevanten Zeitinformationen werden mit Hilfe von Nachrichten zwischen den einzelnen Knoten ausgetauscht. Am Ende eines festgelegten Intervalls (Resynchronisationsintervall) wird eine aus den erhaltenen Nachrichten und dem lokalen Zählerstand berechnete Korrekturfunktion auf die lokale Uhr angewandt und eine neue Runde des Algorithmus gestartet.

Uhrensynchronisationsalgorithmen können aufgrund ihrer Korrekturfunktionen in drei unterschiedliche Gruppen unterteilt werden:
- Convergence-based
- Consistency-based
- Probabilistic

Bei Convergence-based Algorithmen wird einmal pro Resynchronisationsintervall eine Nachricht an alle anderen Knoten versendet. Nachdem ausreichend viele Nachrichten anderer Knoten innerhalb eines Resynchronisationsintervalls gesammelt wurden, wird eine Konvergenzfunktion (z.B. fault-folerant Average [LL88]) auf diese Zeitnachrichten angewandt. Danach wird die lokale Uhr entsprechend dem Ergebnis der Konvergenzfunktion justiert.

Consistency-based Algorithmen beruhen darauf, dass alle nichtfehlerhaften Knoten eine konsistente Sicht des Gesamtsystems haben [Lamport85] . Das heißt alle nichtfehlerhaften Knoten einigen sich auf ein und denselben Wert der Uhr eines Senders, egal ob der Sender (byzantinisch) fehlerhaft ist oder nicht. Wenn der Sender nicht fehlerhaft ist, ist dies auch der Wert der von diesem gesendet wurde. Ähnlich wie bei den Convergence-based Algorithmen verschickt auch hier jeder Knoten einmal pro Resynchronisationsintervall den momentanen Wert seiner Uhr. Die Zeitnachrichten werden von den Knoten weitergeleitet (relayed), dadurch ergibt sich für alle Knoten die gleiche Sicht des Systems. Um die jeweils aktuelle Uhrzeit eines Knotens (zum Sendezeitpunkt) zu bestimmen, wird über die zugehörigen empfangenen Werte bei allen anderen Knoten der Median errechnet. Der neue Wert der lokalen Uhr eines Knotens ergibt sich dann aus dem Median über die zuvor konsistent ermittelten Uhrwerte aller Knoten.

Probabilistische Uhrensynchronisationsalgorithmen gehen im Allgemeinen in zwei Schritten vor, dem Sammeln von Daten und der Durchführung statistischer Tests zur Bestimmung des neuen Wertes der lokalen Uhr [Lu89].

Allgemein ist zu beobachten, dass bei den in der Literatur angeführten Algorithmen Annahmen getroffen werden müssen um deren Funktion zu garantieren [Ram90]. Bei Convergence-based Algorithmen müssen die Nachrichten den Absendern eindeutig zuordenbar sein, dies kann durch vollvernetzte Strukturen oder Signaturen erreicht werden. Weiters muss eine Obergrenze für die Nachrichtenübertragungszeit existieren, wobei die erreichbare Precision durch diese Schranke maßgeblich mitbestimmt wird [LL84]. Die Uhren müssen zum Startzeitpunkt synchronisiert sein bzw. ihre gegenseitigen Abweichungen innerhalb gewisser Grenzen liegen. Convergence-based Algorithmen wurden sowohl in Software [SIFT78], Hardware [Miner92] sowie in hybrider Form, (Kombination aus Software/Hardware) [SynUTC02] implementiert. Bei Consistency-based Algorithmen müssen die Nachrichten den Sendern auch eindeutig zuordenbar sein; es müssen weiters mehrere Runden an Informationsaustausch getätigt werden um bei jedem nichtfehlerhaften Knoten dasselbe globale Bild des Systems zu erreichen, was zu sehr hohen Nachrichtenaufkommen führt. Auch hier muss die Obergrenze für die Nachrichtenübertragungszeit bekannt sein um die geforderte Precision des Algorithmus garantieren zu können. Probabilistische Algorithmen benötigen viele Runden an Informationsaustausch um genügend Daten für die Durchführung der statistischen Tests zur Verfügung zu haben und selbst dann kann das Erreichen von Synchronisation nur mit einer Wahrscheinlichkeit kleiner 1 garantiert werden. Weiters sind probabilistische Methoden nur in Softwarelösungen sinnvoll einsetzbar, da der Hardwareaufwand für die Implementierung der statistischen Tests und der Speicherung der benötigten Daten immens wäre.

Die mit Uhrensynchronisation erreichbare Precision bewegt sich in der Größenordnung von einigen µs bis 100ns [KKMS95] [SynUTC02].

### 2.4 Fehlertoleranter Takt

Unter fehlertolerantem Takt ist ein Taktsignal zu verstehen, welches über mehrere Knoten hinweg, in vorgegeben Grenzen (Precision) synchronisiert, vorliegt und eine definierte Anzahl von fehlerhaften Taktquellen tolerieren kann ohne diese Synchronität zu verlieren.

Der in der Literatur vorherrschende Ansatz zum Generieren eines fehlertoleranten Taktes [VanAlen91] [Choi90] [Vasan98] geht von *n* Knoten mit je einem lokalen Taktgenerator aus mit *n* > 3*f* wobei *f* die Anzahl der vom System tolerierten byzantinischen Fehler darstellt. Jeder Knoten tauscht mit jedem anderen Knoten über Punkt-zu-Punkt-Verbindungen (*n*² Leitungen - wenn der eigene Takt auch zurückgeführt wird) Taktsignale aus. Die global ausgetauschten Taktsignale kennzeichnen sogenannte Makro-ticks welche den systemweit synchronisierten Takt darstellen. Im Gegensatz dazu wird in den einzelnen Knoten ein hochfrequenter Takt welcher in Micro-ticks unterteilt ist verwendet, um das temporal ordering der eintreffenden globalen Taktsignale zu gewährleisten. Durch eine Auswahlfunktion (Voter) wird in jedem Knoten aus allen empfangenen makro-ticks (inklusive dem eigenen) ein Referenztakt ermittelt. Der lokale Takt wird dann falls nötig mit Hilfe einer analogen oder digitalen PLL (Phase Locked Loop) an den ausgewählten Referenztakt angeglichen.

Eine weit verbreitete Annahme, welche auch in den Implementierungen von [Vasan98] und [VanAlen91] Anwendung findet besteht darin, dass die Signallaufzeiten zwischen beliebigen nichtfehlerhaften Knoten nahezu gleich sind, sodass die Voter nichtfehlerhafter Knoten alle Taktsignale nichtfehlerhafter Knoten in derselben Reihenfolge (konsistent) wahrnehmen. Diese Annahme ist unter realen Bedingungen aber keinesfalls aufrecht zu erhalten da, wie im Kapitel der Taktverteilung schon aufgezeigt wurde, die Probleme des clock-skew und der Signallaufzeiten immer vorherrschender werden. Ein Ansatz zur Kompensation der unterschiedlichen Laufzeiten wurde von [Shin88] gezeigt, dieser benötigt jedoch **2*n*** Phasendetektoren und **2*n*²** Leitungen was den Hardwareaufwand und die Fehleranfälligkeit weiter erhöht.

Aufgrund großer Phasenverschiebung einzelner Taktflanken kann es nicht nur zu Inkonsistenzen bei den Votem kommen, es können vielmehr auch Metastabilitätsprobleme an den Voter-Eingängen einzelner Knoten entstehen, da Signaländerungen auch während der Setup- und Hold-time der jeweiligen Eingangs-Flip-Flops auftreten können. Mit speziellen Eingangs-Bufferschaltungen kann die Wahrscheinlichkeit, dass es zu Metastabilitäten kommt zwar beliebig gering gemacht, aber nicht völlig ausgeschlossen werden, was keine konzeptionell elegante Lösung darstellt.

Wenn das Eingangssignal einer PLL zu große Abweichungen zum Referenzsignal aufweist kann die PLL das Signal nicht mehr erfolgreich nachregeln, was zum dauerhaften Verlust der Synchronisation führen kann.

### 2.5 GALS-Systeme

Wenn es also wie in Kapitel 1 ausgeführt schon nicht möglich ist, Synchronität über den gesamten Chip herzustellen, so kann zumindest versucht werden, räumlich begrenzte Bereiche - z.B. Funktionseinheiten in einem SOC (System on a chip, ein aus mehreren komplexen Funktionseinheiten auf einem Chip aufgebautes Gesamtsystem) - in sich synchron zu halten. Die Kommunikation zwischen diesen synchronen "Inseln" kann dann mittels asynchroner Techniken erfolgen. Dieser Ansatz ist unter dem Begriff GALS (Globally Asynchronous Locally Synchronous) bekannt [Chapiro84]. Während die GALS-Technik es ermöglicht, innerhalb einer Funktionseinheit die bewährten synchronen Entwurfsmethoden weiterhin unverändert zum Einsatz zu bringen, treten genau an den Schnittstellen zu den asynchronen Kommunikationseinheiten fundamentale Probleme auf. Um zu verhindern, dass am Asynchron/Synchron-Interface Metastabilitäten auftreten, müssen Synchronisierschaltungen benutzt werden. Diese Synchronizer bauen meist auf pausable/strechable Clocks auf und führen zu erheblichen Verzögerungszeiten im Asynchron/Synchron-Interface [Chelcea00].

Ein weiteres gravierendes Problem beim GALS-Ansatz liegt darin, dass die lokalen Takte völlig unsynchronisiert arbeiten und daher beliebig auseinander driften können. Es ist daher nicht ohne weiteres möglich, ein temporal Ordering von ausgetauschten Informationen zu etablieren. Damit ist der GALS-Ansatz zwar durchaus praktisch verwendbar, er kann in seiner derzeitigen Form aber wohl kaum als konzeptionell elegant und vollständig ausgereift bezeichnet werden.

### 2.6 Asynchrone Logik

Eine konsequentere Vorgangsweise wäre der Schritt zu einer vollständig asynchronen Realisierung der gesamten Logik auf dem Chip. Dies kann nicht einfach durch simples Weglassen des Taktes erfolgen, sondern erfordert vielmehr eine sorgfältige systematische Vorgansweise. Theoretische Arbeiten zu diesem Thema gibt es schon sehr lange (siehe z.B. [Huffman54]). Es lässt sich argumentieren, dass eine derartige asynchrone Realisierung digitaler Logik konzeptionell einige bestechende Vorteile bieten würde (geringerer Leistungsverbrauch, bessere Modularität, etc.) [Myers01] [Hauck95] [Berkel99]. Die bisher vorgeschlagenen Verfahren für die praktische Umsetzung der Konzepte sind jedoch in ihrem derzeitigen Reifegrad hinsichtlich Preis, Performance und Effizienz nur in schmalen Randbereichen eine wirkliche Alternative zum synchronen Design-Paradigma [Steininger04]. Zudem ist das synchrone Design in Werkzeugen, bestehenden Modulen und letztlich auch in der Ausbildung der Entwickler derart fest etabliert, dass der Umstieg in die völlig neue Welt des asynchronen Designs jedenfalls nur zögerlich und schrittweise von statten gehen wird, sofern er überhaupt erfolgt.

### 2.7. Quasi-Asynchrone Systeme

Die in [Fai04] vorgeschlagene Technik zur verteilten Taktgenerierung kann als eine Art Mittelding zwischen synchroner und asynchroner Welt betrachtet werden. Anstatt den Takt eines zentralen Oszillators an die einzelnen Funktionseinheiten auf einem VLSI-Chip zu bringen, wird jeder Funktionseinheit eine spezielle Taktzelle zugeordnet, die deren Takt lokal erzeugt. Dies wird nicht durch dedizierte lokale Oszillatoren erreicht, sondern durch die Anordnung der durch MOS-Fets aufgebauten Taktzellen in einem zweidimensionalen Gitter. Jede Taktzelle ist hier mit 4 Nachbartaktzellen (oben, unten, links rechts) durch dedizierte Taktleitungen verbunden. Die Logik der Taktzellen bewirkt einen Zustandswechsel der Taktleitungen, wenn diese den selben Zustand angenommen haben; sodaß die Gitterstruktur im Endeffekt einen verteilten Ringoszillator realisiert.

Aus der Theorie der verteilten Algorithmen ist jedoch bekannt, dass eine (annähernde) Vollverbindung für jedes Zeitsynchronisationsverfahren notwendig ist, das eine konstante Synchronisationsgenauigkeit für jedes beliebige Paar von lokalen Taktsignalen garantieren soll. Letzteres ist wiederum unabdingbar, wenn auch globale Synchronität gewährleistet werden soll. Dies ist mit dem in [Fai04] beschriebenen Verfahren aber nicht erreichbar, da die Realisierung einer vollständige Punkt-zu-Punkt-Kopplung aller Taktzellen hier praktisch unmöglich ist: De facto scheint bereits eine Verallgemeinerung des Autbaus einer Taktzelle für 3D-Gitterstrukturen, die 6 Taktleitungen benötigen, schwierig zu sein. Die Verarbeitung der im vollverbundenen Falle notwendigen n-1 Taktleitungen ist mit dieser Methode nicht zu realisieren.

Darüberhinaus ist die in [Fai04] bechriebene verteilte Taktgenerierung nicht fehlertolerant: Ein einziger transienter Fehler auf einer der Taktleitungen kann zu einem völligen Taktausfall und/oder zu einem lokalen Overclocking führen. Dies ist angesichts der steigenden Wahrscheinlichkeit von transienten Fehlern in modernen VLSI-Chips in Folge von Partikel-Hits, Versorgungsschwankungen und Einstreuungen nicht akzeptabel.

Schlußendlich ist die in [Fai04] beschriebene Implementierung eines verteilten Clock-Generators direkt auf der technologieabhängigen Transistor-Ebene angesiedelt, während sich die vorliegende Erfindung auf der technologieunabhängigen Gatter-Ebene bewegt.

Zusammenfassend ist das Verfahren aus [Fai04] nicht für beliebige TS-Nets (insbesondere vollverbundene TS-Algs) geeignet, technologieabhängig, nicht fehlertolerant und bietet insbesondere auch keine durch eine Konstante beschränkte Synchronisationsgenauigkeit, ohne die eine synchrone globale Kommunikation zwischen FU's nicht realisiert werden kann.

### 3. UNSER LÖSUNGSPRINZIP

Zusammenfassend sei hier vorab noch einmal kurz zusammengefasst, was die Erfindung betrifft, nämlich ein Verfahren zur verteilten fehlertoleranten Taktgenerierung in Hardware-Systemen,
dadurch gekennzeichnet, daß
a) der Systemtakt durch mehrere, miteinander kommunizierende fehlertolerante Taktsynchronisationsalgorithmen (TS-Algs) verteilt gebildet wird, indem
   i. eine beliebige Anzahl solcher TS-Algs untereinander über ein beliebiges, permanenten und transienten Fehlern unterworfenes Netzwerk (TS-Net) von Taktsignalen Informationen austauschen,
   ii. jeder TS-Alg einer oder mehreren Funktionseinheiten (Fu1, Fu2, ...) zugeordnet ist, deren lokalen Takt er erzeugt, wobei die alleinige Aufgabe einer Funktionseinheit (Fu1, Fu2, ...) darin besteht, den verteilten Taktsynchronisationsalgorithmus zu exekutieren,
b) alle lokalen Takte garantiert frequenzsynchron gehalten werden, in dem Sinne, daß je zwei beliebige lokale Taktsignale in einem beliebigen Zeitintervall höchstens um eine gegebene konstante Anzahl von Taktperioden unterschiedlich sind, sodaß aus jedem beliebigen lokalen Takt durch das Nachschalten von Taktumwandlungsschaltungen ein globaler Systemtakt abgeleitet werden kann, der die globale synchrone Kommunikation beliebiger Funktionseinheiten am Chip erlaubt,
c) eine spezifizierte Anzahl von transienten und/oder permanenten Fehlern in den TS-Algs oder im TS-Net auftreten dürfen, ohne die Taktgenerierung und/oder die Synchronisationsgenauigkeit zu beeinträchtigen.

Dabei kann vorgesehen sein, daß die Bereitstellung des globalen Systemtaktes lediglich von dem Verhältnis der maximalen vs. minimalen end-to-end Signalverzögerung der Signalpfade am Chip abhängt, nicht jedoch von deren Maximum.

Zweckmäßig kann es sein, wenn die Synchronisationsgenauigkeit der bereits aktiven lokalen Takte und somit des davon abgeleiteten globalen Systemtaktes durch Verwendung geeigneter Taktsynchronisationsalgorithmen auch während der Power-Up-Phase der Hardware gewährleistet wird.

Von Vorteil ist es, wenn die Implementierung mittels asynchroner Logik erfolgt.

Außerdem ist es günstig, daß die Stabilität des globalen Systemtaktes durch die Verwendung variabler Verzögerungselemente oder speziellen Taktumwandlungsschaltungen in den TS-Algs erhöht wird, wobei die aktuellen Verzögerungszeiten bzw. Taktkorrekturwerte
- statisch zur Fertigungszeit, und/oder
- für die jeweilige Anwendung des Chips zur Laufzeit konfigurierbar, und/oder
- automatisch, auf Basis einer einmaligen oder kontinuierlichen Messung von Betriebsparametern ermittelt werden.

Die Erfindung schließt auch ein Verfahren ein wobei Taktsynchronisationsalgorithmen verwendet werden, welche die Taktsynchronität bereits während des Resets der Funktionseinheiten gewährleisten.

Die Erfindung schließt auch ein Verfahren ein, wobei für die Datenübertragung zwischen verschiedenen Funktionseinheiten eines Hardware-Systems eine Frequenzteilung des basierend auf dem verteilt generierten Taktes durchgeführt wird.

Außerdem betrifft die Erfindung ein Hardware-System zum Durchführen solcher Verfahren.

Nach den Überlegungen in Kapitel 2 wäre der quasi-asynchrone oder der GALS-Ansatz sehr attraktiv, wenn es gelänge, die Probleme mit der asynchronen Kommunikation zwischen den synchronen Inseln konzeptionell elegant zu lösen. Im Weiteren soll daher von einer Struktur aus lokal synchronen Funktionseinheiten (Modulen) auf einem Chip ausgegangen werden, die untereinander zwar nicht phasensynchron, aber frequenzsynchron arbeiten. *Frequenz-Synchronität* bezieht sich hier auf die Übereinstimmung der Frequenz zweier oder mehrerer Taktsignale. Im Unterschied zur Phasensynchronität ist hier der Beobachtungszeitraum größer: Es ist durchaus zulässig, dass zwischenzeitlich massive Phasenverschiebungen zwischen den Takten auftreten, entscheidend ist, dass die Anzahl der Phasenwechsel in jedem Beobachtungszeitintervall um höchstens eine Konstante differieren dürfen. (Daraus folgt auch, dass über ein unendlich (also ausreichend) großes Intervall hinweg betrachtet alle Taktsignale die gleiche Anzahl von Taktimpulsen aufweisen.) Würde man an die Taktsignale also Zähler schließen, so wäre die maximale Abweichung der Zählerstände über ein beliebig großes Intervall ein Maß für die Qualität der Synchronisation. Im Zusammenhang mit Uhrensynchronisation wurde diese Eigenschaft auch als Precision bezeichnet. Im Unterschied zur Uhren-Synchronisation wird bei der vorgeschlagenen Frequenz-Synchronisation eine Gleichheit der Frequenz kontinuierlich sichergestellt, anstatt lokal Impulse einzufügen oder zu unterdrücken ("Rate Correction") bzw. sprunghafte Korrekturen der Zeit vorzunehmen ("State Correction"). Ganz allgemein sind bei der Uhrensynchronisation die Randbedingungen völlig anders (weite Entfernungen, unterschiedlich schnelle Knoten mit jeweils lokalem Takt etc.) als bei der betrachteten Thematik auf Chipebene, daher sind auch die Lösungen und Qualitätsmaßstäbe hier nicht anwendbar.

Im Kontext der Definitionen aus Kapitel 2.1 stellt Frequenz-Synchronität also ein Mittelding zwischen Phasensynchronität und Zeit-Synchronität dar. Dies wird auch bei Betrachtung der Größenordnungen für die zeitlichen Abweichungen klar: Bei Phasensynchronität darf die Verschiebung der betrachteten Taktsignale keinesfalls größer als ½ Taktperiode sein, bei Zeit-Synchronität wird - aufgrund der erwähnten völlig unterschiedlichen Voraussetzungen - eine Synchronisationsgenauigkeit von 1µs schon als sehr gut angesehen (siehe Kapitel 2.3) - dies entspricht bei 1GHz bereits 1000 Taktperioden. Angesichts der Tatsache, dass Phasensynchronität über den gesamten Chip nicht mehr erreichbar ist, stellt die Frequenzsynchronisation mit zulässigen Abweichungen von einigen wenigen Taktperioden einen vernünftigen "Best Effort" dar.

Im Unterschied zum GALS-Ansatz sind also die lokalen Takte der synchronen Inseln nun nicht mehr unkorreliert, sondern eben frequenzsynchron. Die hierfür erforderliche Synchronisation wird dadurch erreicht, dass von allen Modulen mittels eines verteilten Algorithmus gemeinsam ein globaler Zeitbegriff etabliert wird (siehe Kapitel 4).

Jedes/ausreichend viele Module (= ein oder mehrere räumlich benachbarte funktionale Einheiten) eines VLSI-Chips sollen dazu um eine sehr einfache Funktionseinheit erweitert werden, deren alleinige Aufgabe darin besteht, diesen verteilten Algorithmus zu exekutieren und dadurch einerseits zur Gewinnung des globalen Zeitbegriffes beizutragen und andererseits daraus den lokalen Takt für das Modul abzuleiten. Da die üblichen Algorithmen auf der Replizierung einer Funktion auf allen Knoten basieren, kann diese Funktionseinheit also in identischer Form in allen Modulen implementiert werden. Wesentliches Ziel ist es, die Funktionseinheit in asynchroner Logik zu implementieren, um Probleme mit Metastabilität bereits im Konzept auszuschließen. Rein praktisch ist dies auch deshalb erforderlich, da der für eine synchrone Implementierung des Algorithmus erforderliche Takt ja erst durch den Algorithmus generiert werden soll.

Die üblichen in der Literatur vorgeschlagenen Verfahren (Phasensynchronisation ebenso wie Zeit-Synchronisation) gehen vom Vorhandensein mehrerer Taktquellen aus, und die Aufgabe des Verfahrens besteht letztlich immer darin, eine geeignete Synchronität zwischen den von diesen Quellen gelieferten Taktsignalen herzustellen. Der hier vorgeschlagene Ansatz geht einen vollkommen anderen Weg, der bereits in [Fai04] beschritten wurde: Es gibt hier keine lokalen Taktgeneratoren, sondern nur lokale Instanzen eines einzigen gemeinsamen virtuellen Taktsignals, das durch den verteilten Algorithmus generiert wird. Ein Auseinanderlaufen unterschiedlicher Signale ist daher prinzipiell nicht möglich, Phasenverschiebungen ergeben sich nur aus Laufzeiten bzw. Verarbeitungszeiten des Algorithmus. Die Aufgabe des Verfahrens besteht in diesem Fall daher darin, den Takt nach entsprechenden Regeln zu generieren.

In scharfem Kontrast zu [Fai04], dessen Realisierung keine konstante Synchronisationsgenauigkeit erlaubt, lässt sich mit einem in den folgenden Abschnitten vorgestellten verteilten Algorithmus aber Fehlertoleranz und garantierte maximale Phasenverschiebung (= Synchronisationsgenauigkeit) relativ einfach und elegant etablieren. Der auf diese Weise generierte lokale Takt wird innerhalb des von ihm versorgten Moduls mittels eines einfachen Clock-Trees verteilt, was deswegen unkritisch ist, da die Funktionseinheiten eines Moduls räumlich benachbart sind. Durch geeignete Abbildung des lokalen Taktes (Micro-Ticks) auf einen niederfrequenteren globalen Takt (Macro-Tick) lässt sich schließlich eine über alle Module konsistente synchrone Zeitbasis ableiten [Kopetz97] Dies ist deswegen möglich, weil die Phasenverschiebung zwischen zwei beliebigen lokalen Taktsignalen einen bestimmten Maximalwert nicht überschreitet

Die von GALS-Architekturen bekannten Probleme mit dem Interface synchron/asynchron können also mit dem vorgeschlagenen Verfahren konzeptionell einwandfrei beherrscht werden: Der Algorithmus zur Generierung des globalen Taktes wird nach den Prinzipien asynchroner Logik implementiert. Dies ist zwar aufwendig, vermeidet aber Metastabilitäten völlig. Die lokalen Funktionseinheiten können, soweit sie keine globale Kommunikation involvieren, auf Basis des lokalen Taktes wie gewohnt synchron entworfen werden. Wegen der Existenz eines globalen Taktes kann aber auch die globale Datenkommunikation im gewohnten synchronen Design realisiert werden. Durch geeignete Wahl der Macro-Ticks können auch hier Probleme mit eventueller Metastabilität völlig ausgeschlossen werden.

Insgesamt ergeben sich mit der angestrebten Lösung also folgende wesentliche Vorteile:
- Selbsttaktenz bezüglich trande Schaltung, daher Einsparung der lokalen Taktquellen (Oszillatoren, Quarze) mit systemweit garantierter, durch eine Konstante beschränkter Synchronisationsgenauigkeit.
- Chip läuft zu jedem Zeitpunkt mit der maximal möglichen Taktfrequenz
- Ersetzen des komplexen, energiefressenden globalen Clock-Trees durch unkritische Punkt-zu-Punkt-Verbindungen
- Optimaler Tradeoff bezüglich Erhaltung der synchronen Abstraktion und der effektiven Synchronität unter den gegebenen physikalischen Randbedingungen
- Fehlertoleransienter und permanenter Fehler der Clock-Signale

In den folgenden Abschnitten wird eine mögliche Realisierung dieses Prinzips im Detail dargestellt.

### 4. VERWENDETER BASIS-ALGORITHMUS

### 4.1 Grundlagen

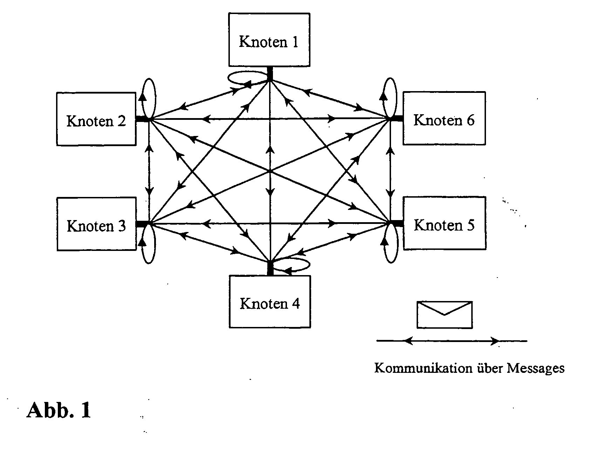

Den Ausgangspunkt bildet ein existierender convergence-based Algorithmus (siehe Kapitel 2.3) auf Message-Ebene [Srikanth87]: Dieser Algorithmus geht von einem verteilten System aus n Rechnerknoten aus, wobei alle Knoten untereinander auf Punkt-zu-Punkt-Verbindungen über Messages kommunizieren können (voll vernetzte Struktur, siehe Abbildung 1). Jeder Knoten besitzt also n Eingänge und n Ausgänge (je einen von/zu einem der n-1 anderen Knoten plus ein Loop-back zu sich selbst). Die Kommunikation läuft im weitesten Sinne rundenbasiert ab, wobei im fehlerfreien Fall jeder Knoten in jeder Runde mindestens eine Synchronisationsnachricht sendet und zwar gleichzeitig über alle n Ausgänge (über weitere, applikationsbezogene Nachrichten werden hier keine Annahmen gemacht). Auf Basis dieser Synchronisationsnachrichten wird mittels eines verteilten Agreement eine gemeinsame Zeitbasis geschaffen. Dieses Agreement funktioniert korrekt mit bis zu *f* fehlerhaften Knoten (bzw. können pro Knoten und Runde bis zu *f* fehlerhafte oder fehlende eingehende Messages toleriert werden), wenn n > 3f. Beim Systemdesign kann also berücksichtigt werden, welche Anzahl f von Fehlern erwartet wird. Bei Anwendung des in [WS03] und [Widder03] vorgestellten hybriden Fehlermodells kann die Fehlertoleranz sogar noch genauer an die Bedürfnisse angepasst werden.

Der Algorithmus liefert eine Zeitbasis in Form einer in ansteigender Reihenfolge nummerierten Sequenz von Runden, wobei jede Runde einem Taktschritt entspricht. Der Übergang von einer Runde in die nächste wird per Agreement so festgelegt, dass zu jedem Zeitpunkt ein minimales Maß an Synchronität aller (nicht fehlerhaften) Knoten im Netz garantiert ist. Insbesondere kann für die fehlerfreien Knoten folgendes garantiert werden: Befindet sich ein Knoten in Runde *k*, so sind alle anderen Knoten gerade in einer Runde *i*, wobei |*i* - *k*| < Θ+2. Dabei ist der Güteparameter Θ durch das Verhältnis aus maximaler zu minimaler Laufzeit einer Message im System gegeben. Die Zeitbasis ist (zunächst) nicht auf eine externe (absolute) Referenz synchronisiert, sondern nur innerhalb des Systems (Precision wird garantiert, aber keine Accurracy).

Der Algorithmus läuft auf allen Knoten in gleicher Weise ab, wobei sich durch den Austausch der Messages die gewünschte Interaktion der lokalen Abbilder ergibt, die letztlich zu einem ständigen selbsttätigen Weiterlaufen des Algorithmus führt. Das dynamische Verhalten wird durch die lokalen Abarbeitungszeiten für den Algorithmus sowie die jeweiligen Laufzeiten auf den Leitungen bestimmt. Der Algorithmus ist im Original in [Srikanth87] zu finden, hier wird im Weiteren eine vereinfachte Version betrachtet, die für eine Abbildung in Hardware günstiger erscheint. Der Ablauf beginnt zunächst mit einem Initialisierungsschritt (R) und fußt danach im Wesentlichen auf zwei Regeln (1) und (2):
(R) "Reset":
on reset
send (msg[1]) {once}
local_tick := 1

Jeder Knoten stellt seinen lokalen Rundenzähler also zunächst auf den Wert 1 und sendet eine ensprechende Message an alle, um den Ablauf des Algorithmus in Gang zu setzen.
(1) "Relay":
when received (msg[k]) from f+1
then send (msg [k]) {once}

Wenn ein Knoten von zumindest *f*+1 anderen Knoten - also von zumindest einem nicht fehlerhaften - die Message "*k*" erhält, so sendet er selbst ebenfalls die Message "*k*" an alle Knoten, auch an sich selbst. Da wie erwähnt der gleiche Algorithmus parallel auch auf allen anderen Knoten läuft, entsteht sozusagen ein globales "Stimmungsbild", welche Knoten für den Zeitschritt in Runde *k*+1 bereit wären. Diese Regel kann unabhängig davon angewendet werden, in welcher Runde (*local_tick*) sich der betreffende Knoten selbst befindet, solange *k* > *local_tick.*
(2) "Increment":
when received (msg[k]) from 2f+1
then send (msg[k+1]) {once}
local_tick := k+1

Erhält ein Knoten *p* von zumindest 2*f*+1 Knoten (inkl. sich selbst) die Message "*k*", so ist offenbar ein qualifizierte Mehrheit der Knoten in Runde k und bereit, in die Runde *k*+1 weiterzugehen. Genauer gesagt sind unter den 2*f*+1 Knoten selbst im worst case (*f* fehlerhafte Knoten) noch zumindest *f*+1 korrekte Knoten, die offenbar bereits die Message "*k*" versendet haben. Bei allen nicht fehlerhaften Knoten muss daher Regel (1) feuern, sodass eine Flut von "*k*"-Messages zu erwarten ist und nach Regel (2) zwingend alle fehlerfreien Knoten in Zustand *k*+1 übergehen werden. Knoten p erhöht daher seinen lokalen Rundenzähler um einen Taktschritt und sendet die entsprechende Message "k+1". Diese Regel kommt übrigens nur zur Anwendung, wenn sich der betreffende Knoten selbst in Runde k befindet.

Das Eintreffen der Synchronisations-Message *k* vom Knoten *p* beim Knoten *q* entspricht also der Mitteilung an Knoten *q*, dass Knoten *p* der Meinung ist, es sei gerechtfertigt, in Runde *k*+1 überzugehen, d.h. die globale Zeit um einen Taktschritt zu erhöhen. (Dabei ist zu beachten, dass dies nicht notwendigerweise bedeutet, dass auch Knoten *p* sich bereits in Runde *k* befindet bzw. dass er selbst gleich in Runde *k*+1 übergehen wird.)

Zu beachten ist, dass ein Knoten eine bestimmte Message (also z.B. "*k*") nur ein einziges Mal senden muss. Jene der beiden Regeln, die später "feuert", braucht daher keine Message mehr zu versenden, bzw. werden Replika gleicher Messages vom Empfänger verworfen. Weiters ist entscheidend, dass der Sender einer Nachricht zweifelsfrei identifiziert werden kann (daher die Forderung nach Punkt-zu-Punkt-Verbindung). Anderenfalls könnte ein fehlerhafter Knoten auch die Identität anderer Knoten annehmen und in deren Namen Nachrichten versenden.

Interessant festzustellen ist weiters, dass Regel (1) auf einem Knoten p nur dann vor Regel (2) zum Zug kommt, wenn der *local_tick* von zumindest *f*+1 anderen Knoten schon weiter ist als bei p. Knoten p behält in diesem Fall zwar seinen Rückstand bei, trägt aber durch Senden der entsprechenden Message zur Meinungsbildung unter den schnelleren Knoten bei.

### 4.2 Booting

Nach dem Reset muss zunächst sichergestellt werden, dass alle Knoten empfangsbereit sind. Danach sendet jeder Knoten von sich aus wie beschrieben eine Message "1", um den Algorithmus ordnungsgemäß zu initialisieren. Danach greifen die Regeln (1) und (2). Nachzügler - d.h. Knoten, die erst sehr spät mit ihrer Initialisierung fertig werden - können dann durch die so genannte catch-up-Rule unmittelbar auf den aktuellen Stand nachgezogen werden. Details des Startvorganges sind in [Widder03] zu finden.

### 4.3 Eigenschaften

Die wichtigsten Eigenschaften dieses Algorithmus sind:
- Auf Basis des Algorithmus wird in verteilter Weise ein globaler Takt in Form von "Runden" (= Micro-Ticks) generiert, der auf allen beteiligten (nicht fehlerhaften) Knoten ein vorgegebenes Maß an Synchronität bietet.
- Der Algorithmus ist zeitfrei, und es sind keinerlei Einschränkungen bezüglich der Nachrichtenlaufzeiten (bzw. bezüglich der Antwortzeit auf eine empfangene Nachricht) nötig.
- Allein der Quotient Θ aus maximaler zu minimaler Laufzeit der Nachrichten (inkl. Verarbeitungszeit) determiniert die erreichbare Synchronisationsgenauigkeit. Man beachte, dass die absoluten Laufzeiten für die Precision keine Rolle spielen (wohl aber für die Accurracy, falls externe Synchronisation gewünscht ist) [Widder04].
- Die auf Basis des Algorithmus gebildete Zeitbasis erlaubt ein temporal Ordering von Messages mit einer Granularität von π(Θ) Micro-Ticks.
- Seine Funktion und seine Precision sind formal beweisbar [Widder03]
- Das ordnungsgemäße Starten des Algorithmus ist unter gegebenen Bedingungen formal beweisbar [Widder03].
- Es können bis zu f beliebige (auch byzantinische) Fehler gleichzeitig toleriert werden. Über die Anzahl der Knoten kann die Fehlertoleranz einfach skaliert werden.

### 5. EINSATZ FÜR ON-CHIP TAKTGENERIERUNG

Der beschriebene Algorithmus ist ursprünglich dafür vorgesehen, Rechnerknoten in einem verteilten System zu synchronisieren. Unser Ansatz besteht nun darin, diesen Algorithmus zu verwenden, um für eine oder mehrere Hardware-Funktionseinheiten (HW-FU) z.B. auf einem VLSI-Chip oder einem System-on-a-Chip einen frequenzsynchronen Takt zur Verfügung zu stellen, möglichst ohne über individuelle Laufzeiten Annahmen treffen zu müssen. Dabei sind folgende wesentliche Probleme zu überwinden:

### 5.1. Synchronisationsgenauigkeit

Bei einem in SW implementierten Synchronisationsalgorithmus wird eine Precision in der Größenordnung von 1µs als hervorragend angesehen. In HW erreichen die üblichen Taktraten mehrere 100MHz, die für eine Synchronisation erforderliche Precision muss daher (absolut betrachtet) um Größenordnungen besser sein.

Auch bezüglich des Θ-Wertes ist es in der HW zumindest ungewöhnlich: Hier interessiert zumeist nur die Phasenverschiebung zwischen zwei Takten, und Θ = 1 entspricht bereits 360°, also einer ganzen Periode, und größere Werte entsprechend mehreren Perioden. Andererseits kann davon ausgegangen werden, dass die Unterschiede in den Verzögerungszeiten der Nachrichten bei einer HW-Implementierung deutlich geringer sein werden als in SW, da die für die SW-Lösung typischen Probleme mit Queuing und mangelnder Performance des Knotens bei einer massiv parallelen direkten Abarbeitung in HW kaum auftreten werden.

### Lösung:

Die Annahme von Θ ≤ 2 scheint also sowohl hinsichtlich der typischen Anforderungen als auch hinsichtlich der gegebenen Randbedingungen der HW sehr realistisch. Hier erweist sich der gewählte Algorithmus als extrem günstig, da nur die relative Abweichung eingeht.

### 5.2. Kommunikations-Overhead

Bei dem in SW implementierten Algorithmus wird die Existenz eines Kommunikationsmediums zwischen den Knoten bereits vorausgesetzt. Ein solches Medium wird ohnehin für den Austausch von applikationsbezogenen Daten benötigt; der Algorithmus wird auf diese bestehende Struktur nur aufgesetzt und verursacht nur Overhead bezüglich der nutzbaren Bandbreite. Die benötigte Punkt-zu-Punkt-Verbindung muss nicht notwendigerweise physikalisch realisiert sein. Entscheidend ist nur, dass ein Empfänger einer Nachricht eindeutig auf den Sender rückschließen kann - und dazu genügt eine virtuelle Punkt-zu-Punkt-Kommunikation z.B. über einen Bus mit entsprechender Adressierung, Sender-Identifikation und ggf. Signatur. Weiters muss durch entsprechende Redundanz sichergestellt werden, dass dieser Bus ausreichend fehlertolerant ist, um die Fehlertoleranz des Gesamtsystems nicht zu beeinträchtigen.

In der vorgesehenen Hardware-Implementierung hingegen dient der Algorithmus allein der Bereitstellung eines globalen Taktsignals. Die Infrastruktur für die Kommunikation muss eigens für diesen Zweck erst aufgebaut werden und geht daher unmittelbar als Hardware-Overhead ein. Die Verwendung der ohnehin für die Datenkommunikation vorhandenen Busse scheidet aus, da die angestrebten Taktraten nur dann erreichbar wären, wenn der Bus durch die Synchronisation zu 100% ausgelastet wäre und daher für Datenkommunikation nicht mehr verfügbar wäre.

Eine serielle Kommunikation zwischen den Knoten scheidet aus, da sich mit ihr bezüglich Frequenz und Synchronisiergenauigkeit (im Unterschied zur SW-basierten Lösung) keine zufrieden stellenden Ergebnisse erzielen lassen. Die Realisierung von parallelen Verbindungen ist wirtschaftlich nur sinnvoll machbar, wenn nicht tatsächlich physikalische Punkt-zu-Punkt-Verbindungen hergestellt werden müssen - dies wären nämlich *n*² parallele Verbindungen nur für die Bereitstellung eines Taktes. Die physikalische Realisierung als Bus (mit virtuellen Punkt-zu-Punkt-Verbindungen) wiederum verursacht einen Protokoll-Overhead (Arbitration, Sender-ID plus Signatur, etc.), der letztlich die erreichbare Taktrate bzw. Synchronisiergenauigkeit wieder empfindlich reduziert. Zudem wäre eine mehrfach redundante Auslegung erforderlich.

### Lösung:

Die konventionelle Lösung - nämlich eine einzelne globale Taktleitung - stellt eine bezüglich Effizienz nicht überbietbare Referenz als Meßlatte dar, die die Akzeptanz jedes neuen Ansatzes erheblich erschwert. Es erscheint daher notwendig, den Informationsgehalt der Messages auf 1 Bit zu reduzieren, sodass mit einem einfachen 1 Bit-Signal für physikalische Punkt-zu-Punkt-Verbindungen das Auslangen gefunden wird. Die Diskussion serielle versus parallele Übertragung erübrigt sich in diesem Fall.

### 5.3. Beschränkter Informationsgehalt d. Messages

Ein wesentliches Problem bei der Umsetzung des Algorithmus besteht eben nun darin, mit dieser minimalen 1-Bit Information auszukommen. Insbesondere ist es unter dieser Randbedingung nicht möglich, eine explizite Nummer (k) für die aktuelle Runde zu übertragen wie eigentlich im Algorithmus vorgesehen.

### Lösung:

Die *k*-Werte werden inkrementell übertragen (d.h. als Impulse) und der entsprechende Absolutwert durch eine Zähler beim jeweiligen Empfänger verwaltet. Eine Sender-ID ist so nicht realisierbar, was die Ausführung als physikalische Punkt-zu-Punkt-Verbindung zwingend macht.

Unter den gegebenen Randbedingungen bietet es sich an, die Technik des Transition-Signaling [Hauck95] anzuwenden.

### 5.4. Booting ohne Absoluhwerte für k

Im ursprünglichen Algorithmus beruht das Booting darauf, dass eine Mehrheit von Knoten sich zunächst verständigt und dann ein Fortschreiten des Taktes ermöglicht. Nachzügler werden wie erwähnt durch die catch-up-Rule nachgezogen. Dies erfordert allerdings die Kenntnis des absoluten k-Wertes, da der lokale Zähler des langsamen Knoten ja offenbar nicht auf dem aktuellen Stand ist.

### Lösung:

Lösungen wären daher (a) eine Änderung der Booting-Strategie so dass man ohne catch-up-Rule das Auslangen findet, (b) die "gelegentliche" Übertragung des k-Wertes oder (c) die Auslegung der HW so dass der Zähler auf jedem Knoten schon arbeitet, unabhängig davon, ob der Knoten selbst schon fertig initialisiert ist.

### 5.5. Mehrfache Triggerung einer Message

Da ja der absolute Wert von k nicht in der Message enthalten ist, ist es wichtig sicherzustellen, dass jede der Regeln für jedes k nur einmal triggert. Zusätzlich ist es aus verschiedenen Gründen erstrebenswert, dass jede Message überhaupt nur einmal gesendet wird, d.h. jeweils nur die frühere der beiden Regeln triggert. Diese Forderung ist in HW aufgrund der Parallelität schwer umsetzbar (beide Regeln könnten ja genau "gleichzeitig" triggern).

### Lösung:

Als Lösung bietet sich an, steigende bzw. fallende Flanke des Taktsignals als Kennzeichnung für gerade bzw. ungerade k zu verwenden, sodass ein Senden desselben k-Wertes innerhalb kurzer Zeit einfach vermieden werden kann (steigende Flanke folgt steigender Flanke), während bei größeren Abständen identische Messages einfach auf konventionelle Weise maskierbar sind.

### 5.6. Komplexität des Algorithmus

Auf den Rechnerknoten in der SW Lösung bereitet es keine Probleme, auch komplexere Berechnungen durchzuführen, da dies ja in SW erfolgen kann. Bei einer reinen HW Lösung muss die benötigte Funktionalität direkt in HW abgebildet werden (z.B. State-Machine), und selbst algorithmisch einfache Berechnungen wie eine Multiplikation können zu massiven Overheads führen. Zudem verursacht die angestrebte Realisierung in asynchroner Logik zusätzliche Overheads. Es ist zu bedenken, dass auf jedem Knoten n Nachrichten eingehen und daher systemweit insgesamt *n*² Einheiten zur Verarbeitung eingehender Nachrichten implementiert werden müssen.

### Lösung:

Hier bietet sich keine generelle Lösung an, es muss vielmehr bei der Implementierung in HW im Detail so weit wie möglich optimiert werden. Dazu muss es gelingen, den Algorithmus in eine Darstellung umzuwandeln, die sich in der HW optimal abbilden lässt.

Im Detail sind in der HW-Implementierung noch zahlreiche Detailprobleme zu lösen, die im Wesentlichen darauf zurückzuführen sind, dass bei parallel ablaufenden Prozessen mit unterschiedlicher (unbekannter) Laufzeit, eine Ordnung der Abläufe sehr problematisch ist, während in SW Prozesse geordnet und atomar ablaufen können.

Es sei darauf hingewiesen, dass die beschriebenen Lösungen allesamt zum Ziel haben, eine möglichst effiziente Abbildung auf Hardware zu erreichen. Das zugrunde liegende Verfahren der Anwendung eines verteilten Algorithmus zur Frequenzsynchronisation von Knoten, sowie dessen Implementierung in asynchroner Hardware lassen sich auch auf anderen Wegen realisieren. Keine der getroffenen Entscheidungen ist daher zwingend.

### 6. VORGESCHLAGENE HW-REALISIERUNG

### 6.1 Architektur

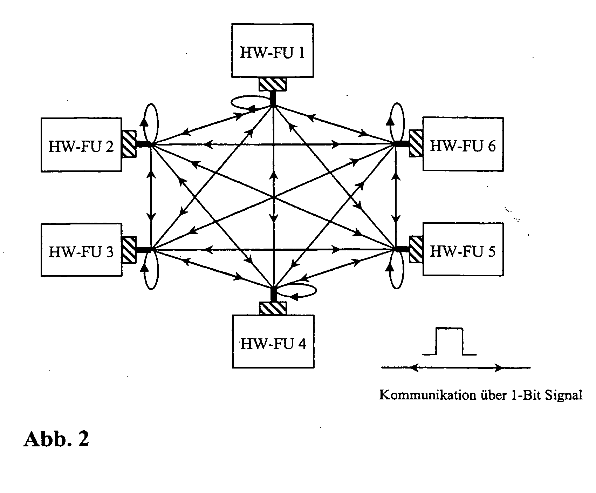

Aus der obigen Diskussion ergibt sich eine voll vermaschte Struktur aus 1-Bit-Leitungen entsprechend Abbildung 2. Erfreulicher Weise kommen zur Zeit gerade Chip-Architekturen auf den Markt, die diese Architektur unterstützen: Ursprünglich für den Einsatz bei GALS Architekturen gedacht, ist z.B. die NoC (Network on Chip) Design Strategie von Arteris [Arteris04] mit einer Switch Fabric ausgestattet, die die erforderlichen Kommunikationsstrukturen für Daten und Takt sehr gut zu unterstützen scheint.

### 6.2 Realisierung der Funktionsblöcke

In der SW-Lösung wird implizit vorausgesetzt, dass jeder Rechnerknoten unabhängig vom global synchronisierten Zeitbegriff zusätzlich auch über einen lokalen Takt verfügt, mit dem z.B. der lokale Prozessor betrieben wird. Die zeitliche Auflösung dieses lokalen Prozessortaktes ist um Größenordnungen besser als der Abstand der eingehenden Nachrichten und die Precision der globalen Zeit. Es ist daher legitim anzunehmen, dass eingehende Nachrichten quasi kontinuierlich empfangen und verarbeitet werden.

Ziel der HW-Lösung ist es aber, eben genau ohne einen lokalen Taktgenerator auszukommen und vielmehr den lokalen Takt aus dem verteilt generierten globalen Takt abzuleiten.

Damit steht für das Empfangen und Verarbeiten der Nachrichten jedoch a priori kein Taktsignal zur Verfügung. Offensichtlich kann daher dieser Algorithmus nur dann überhaupt starten, wenn alle für die Generierung des Taktsignals relevanten Einheiten taktfrei arbeiten, d.h. in asynchroner Logik implementiert sind (schraffierte Boxen in Abbildung 2). Bei geeigneter Auslegung vermeidet man damit auch Probleme mit Metastabilität und Race-Conditions, wie sie sich bei synchroner Realisierung der lokalen Logik (d.h. mit lokalem Takt) zwangsläufig ergeben würden.

Diese asynchronen Boxen wären also in der Lage, im Kollektiv verteilt einen Takt zu generieren, den sie dann ihrer jeweiligen lokalen Funktionseinheit HW-FUn zur Verfügung stellen. Damit steht ein globaler Zeitbegriff zur Verfügung, der z.B. die Kommunikation zwischen den einzelnen Funktionseinheiten vereinfacht, bzw. das Synchronisieren von Aktionen (Peripheriezugriffe, Ansteuerung von Aktuatoren etc.) erlaubt.

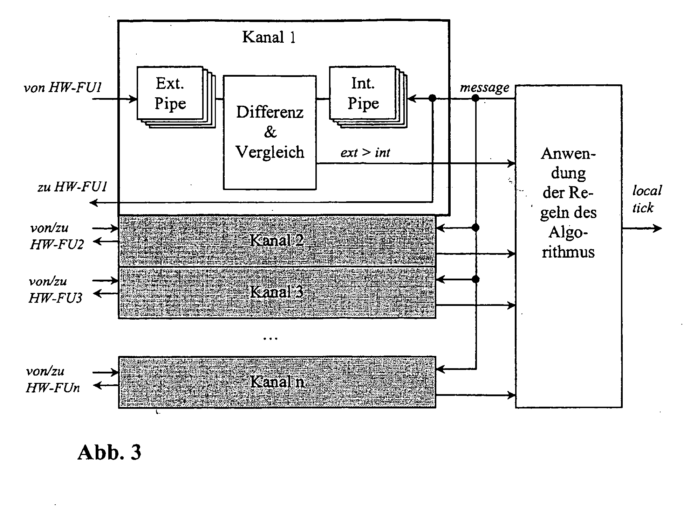

Abbildung 3 zeigt das vorgeschlagene Prinzip der Realisierung. Das dargestellte Prinzipschaltbild entspricht einer einzelnen "schraffierten Box" in Abbildung 2. Das Realisierungsprinzip ist folgendes:

Es wird davon ausgegangen, dass jeder Knoten (in unserem Fall also jede HW-FU) jede Message nur genau ein mal sendet. Eine solche Message ist nichts anderes als eine Flanke auf der Leitung. Unter dieser Voraussetzung könnte man die Message-Nummer (also das "*k*" aus dem ursprünglichen Algorithmus) durch einen Zähler bei jedem Empfängerknoten realisieren, wobei man für jeden Eingang *i* einen solchen Zähler Z_{ext,i} benötigt. Gleichzeitig wird mit dem Versenden einer Message ein interner Zähler Zᵢₙₜ inkrementiert. Da auf allen Ausgängen gleichzeitig gesendet wird, reicht hier grundsätzlich ein gemeinsamer Zähler für alle Kanäle. Für jeden Kanal *i* kann nun aus dem Vergleich der Zählerstände lokal entschieden werden, ob bereits eine Nachricht mit höherem *k* empfangen wurde (oder auch mehrere). Dies ist genau dann der Fall, wenn Z_{ext,i} > Zᵢₙₜ. Ist dies auf genügend vielen Kanälen der Fall, so kann entsprechend der Regeln des Algorithmus eine neue Message (=Flanke) gesendet werden bzw. wird der lokale Zeitbegriff durch einen Taktimpuls *local_tick* erhöht.

Aus der obigen Beschreibung wird erkennbar, dass nur ein *relativer* Vergleich von Z_{ext,i} und Zᵢₙₜ erforderlich ist. Es liegt daher nahe, den HW-Aufwand für die Zähler einzusparen, und stattdessen nur Queues vorzusehen, aus denen jeweils paarweise Einträge entnommen werden, sodass nur die Differenz sichtbar wird. Diese Queues werden in asynchroner Realisierung günstiger Weise (wenn auch nicht notwendiger Weise) als elastic Pipelines nach [Sutherland89] realisiert. Dies ist schematisch in Abbildung 3 durch "Int. Pipe" und "Ext. Pipe" dargestellt. Das Modul "Differenz & Vergleich" sorgt dafür, dass Einträge aus diesen Pipes jeweils paarweise konsumiert werden, d.h. aus Int Pipe und Ext Pipe zugleich. Verbleibt nun in Ext Pipe ein Eintrag, während Int Pipe bereits leer ist, so ist offenbar Z_{ext,i} > Zᵢₙₜ, was vom nachfolgenden Modul "Anwendung der Regeln des Algorithmus" entsprechend ausgewertet wird. Hier ist darauf zu achten, dass stets nur eine der beiden Regeln feuert. Da das Lesen konsumierend erfolgt, muss nun Zᵢₙₜ für jeden Kanal repliziert werden, das Einfügen eines Eintrages beim Senden einer Message erfolgt jedoch für alle Z_{int,i} zugleich.

Die erforderliche Tiefe der Pipes ergibt sich aus der maximal erwarteten Differenz zwischen empfangener Rundenzahl und selbst versendeter Rundenzahl und ist durch den Algorithmus auf den Wert Θ begrenzt. Hier kann mit der weiter oben motivierten Begrenzung auf Θ ≤ 2 der Aufwand für die Queues in Grenzen gehalten werden.

Wie auch bei der Realisierung in SW ist es hier günstig, auch die eigene Message an einem Eingang zu empfangen. Dies trägt wesentlich dazu bei, die minimale Laufzeit einer Nachricht nicht überproportional kurz zu machen (also etwa durch eine interne Verbindung), da dies den Wert von Θ verschlechtern würde.

### 6.3 Fehlertoleranz

Aufgrund der inkrementellen Übertragung der Message k durch Impulse bleibt ein einmal aufgetretener Fehler auf Dauer bestehen. Dies vermindert offenbar die Robustheit der Lösung. Auch wenn bis zu *f* solcher Fehler toleriert werden können, ist die "Mission Time" einer solchen Realisierung in der Praxis begrenzt, solange nicht ein Weg gefunden wird, derartige Fehler wieder zu korrigieren. Dies könnte z.B. auf Datenebene erfolgen, indem gelegentlich auch der absolute Wert von *k* bzw. *local_tick* unter den Knoten ausgetauscht wird. Die zeitlichen Constraints für derartige Korrektur-Messages wären aufgrund der ohnehin vorhandenen Fehlertoleranz völlig unkritisch (Auslegung nur für Mehrfachfehlerwahrscheinlichkeit).

### 6.4 Frequenzstabilisierung

Da der verteilte Taktgenerator keinen Quarzoszillator verwendet, ist die Konstanz und Stabilität der Taktfrequenz relativ gering: Zwar läuft der Chip zwar immer mit der von den jeweiligen Betriebsbedingungen abhängigen maximalen Frequenz, was für die interne Verarbeitung in der Regel optimal ist, was aber das Interfacing mit externen synchronen Komponenten erschwert.

Die Frequenzstabilität kann jedoch unter anderem dadurch verbessert werden, dass in den Clockleitungen des TS-Nets variable Verzögerungsglieder eingebaut werden, die bei der Chip-Fertigung, dynamisch zur Laufzeit oder sogar kontinuierlich während des Betriebs programmiert werden. Ein Beispiel für letzteres wäre die von TCXO's her bekannte Temperaturkompensation, bei der kontinuierlich die Temperatur des Chips gemessen und die einer Chip-spezifischen Temperaturkurve entsprechende Verzögerung eingestellt wird.

Als alternative Möglichkeit steht die Verwendung von Taktumwandlungsschaltungen zur Verfügung, bei der aus einem lokalen Takt ein anderes Taktsignal abgeleitet wird. Hier können *Adder-based Clocks* [SSHL97][SSHL97][SSHL97][SSHL97][SSHL97][SSHL97](eventuell in Kombination mit PLLs oder DLLs) eingesetzt werden. Adder-based clocks erlauben es, auch nicht-ganzzahlige Taktverhältnisse zu erzeugen.

### 6.5 Reset

Die selben Probleme wie bei der Taktverteilung führen dazu, dass es bei großen VLSI-Chips und hohen Taktfrequenzen zunehmend schwieriger wird, sicherzustellen, dass im Falle eines (Power-Up-)Resets alle funktionalen Einheiten mit dem selben Taktzyklus beginnen. Da der zur Taktgenerierung verwendete verteilte Algorithmus die globale Synchronität auch während des Power-Ups garantiert, kann ein sauberer simultaner Start der Operationen aller funktionaler Einheiten am Chip einfach realisiert werden. Hierfür ist es lediglich erforderlich, auf jenen Macro-Tick zu warten, zu dem alle Funktionseinheiten eine open-collector Reset-Done-Leitung "ausgelassen" haben: Jede FU, die diese Leitung zu Beginn eines Macro-Tick inaktiv findet, kann mit ihren Operationen beginnen. Die garantierte Synchronisationsgenauigkeit stellt sicher, dass alle Funktionseinheiten dies im selben Macro-Tick tun.

### VORTEIL DER VORGESCHLAGENEN LÖSUNG

- Selbsttaktende Schaltung, daher Einsparung der lokalen Taktquellen (Oszillatoren, Quarze) mit systemweit garantierter, durch eine Konstante beschränkter Synchronisationsgenauigkeit.
- Im Unterschied zu allen HW-basierten Methoden zur Gewinnung eines fehlertoleranten Taktes werden an den HW-FUs keine lokalen Taktgeneratoren und PLLs benötigt, der Takt wird durch das Zusammenspiel der verteilten Einheiten generiert.
- Der komplexe, energieaufwendige Clock-Tree entfällt ebenso wie der große Aufwand zur Chip-weiten Optimierung des Clock-Skews.
- Anders als bei GALS bleibt das synchrone Design-Paradigma gewahrt, sowohl lokal (auf der Ebene der Micro-Ticks) als auch global (auf der Ebene der Macro-Ticks). Durch geeignete Wahl der Macro-Ticks können auch Probleme mit Metastablilität vermieden werden.
- Es sind keinerlei Annahmen über die absoluten Laufzeiten erforderlich. Selbst der relative Unterschied Θ von langsamster zu schnellster Verarbeitungszeit hat nur Einfluss auf die erreichbare Precision.
- Bei der Generierung und Verteilung des Taktes können f beliebige Fehler toleriert werden. Die Architektur ist bezüglich f beliebig skalierbar. Auch das ist bei den traditionellen Methoden für fehlertolerante Taktung nicht gegeben.
- Im fehlerfreien Fall werden die *f* langsamsten Knoten vom Algorithmus "mitgezogen", d.h. sie können das Gesamtsystem nicht bremsen.
- Durch die Verwendung asynchroner Logik (elastic Pipeline, Muller-C-gates) bei der Implementierung des Algorithmus werden Probleme mit Metastabilität prinzipiell vermieden. Bei den üblichen Lösungen zur Adaption von lokalen Takten kann Metastabilität nur hinreichend unwahrscheinlich gemacht, jedoch nicht vermieden werden.[Kopetz97]
- Die Taktrate passt sich automatisch an die jeweiligen Gegebenheiten an, d.h. der Chip läuft immer mit der maximalen Frequenz. Änderungen im Chip-Design oder in der Technologie erfordern höchstens eine Anpassung des 0-Wertes, aber sonst keine Änderungen der Taktgenerierungsalgorithmen.
- Da die verteilte Taktgenerierung Synchronität auch während des Power-Ups garantiert, kann ein sauberer simultaner Start der Operationen aller funktionaler Einheiten am Chip realisiert werden. In scharfem Kontrast zu existierenden Verfahren erfordert dies keinen synchronen Reset, der auf großen Chips mit hohen Taktfrequenzen zunehmend schwieriger zu implementieren ist.

### REFERENZEN

[Widder03] Josef Widder. Booting clock synchronization in partially synchronous systems. In Proceedings of the 17th International Symposium on Distributed Computing (DISC'03), vol. 2848 of LNCS, pp. 121-135. Springer 2003.
[LeLann03] Gerard Le Lann and Ulrich Schmid. How to implement a timer-free perfect failure detector in partially synchronous systems. Technical Report 183/1-127, Department of Automation, Technische Universität Wien, April 2003
[Inte102] Ram Bhamidipati, Ahmad Zaidi, Siva Makineni, Kah K. Low, Robert Chen, Kin-Yip Liu and Jack Dalgrehn. Challenges and Methodologies for Implementing High-Performance Network Processors. Intel Technology Journal Vol. 06, issue 03, August 15, 2002. Intel Corporation.
[Scherrer02] Christoph Scherrer and Andreas Steininger. Identifying Efficient Combinations of Error Detection Mechanisms Based on Results of Fault-Injection Experiments. IEEE Transactions on Computers Vol. 51, No. 2, February 2002, pp. 235-239. IEEE Computer Society Press.
[Choi90] Bong-Rak Choi, Kyu Ho Park and Myunghwan Kim. An Improved Hardware Implementation of the Fault-Tolerant Clock Synchronization Algorithm for Large Multiprocessor Systems. IEEE Transactions on Computers Vol. 39, No. 3, March 1990, pp. 404-407. IEEE Computer Society Press.
[VanAlen91] D.J. VanAlen and A.K. Somani. An All Digital Phase Locked Loop Fault Tolerant Clock. International Symposiun on Circuits and Systems, Vol. 05, June 1991, pp. 3170-3173. IEEE Computer Society Press.
[Vasan98] Nagesh Vasanthavada and Peter N. Marinos. Synchronization of Fault-Tolerant Clocks in the Presence of Malicious Failures. IEEE Transactions on Computers Vol. 37, No. 4, April 1988, pp. 440-448. IEEE Computer Society Press.
[Miner92] Paul S. Miner, Peter A. Padilla and Wilfredo Torres. A Provably Correct Design of a Fault-Tolerant Clock Synchronization Circuit. in Proc. Digital Avionics Systems Conference, IEEE/AIAA 11th, 5-8 Oct. 1992, pp. 341- 346.
[Schneider87] Fred B. Schneider. Understanding Protocols for Byzantine Clock Synchronization. Technical Report 87-859, Dept. of Computer Science, Cornell University, Ithaca, N.Y., Aug. 1987.
[Lamport85] Leslie Lamport and P.M Melliar-Smith. Synchronizing Clocks in the Presence of Faults. Journal of the ACM. Vol. 32, pp.52-78, Jan.1985.
[Restle01] Phillip J. Restle, et. al. A Clock Distribution Network for Microprocessors. IEEE Journal of Solid-State Circuits Vol. 36, No. 5, May 2001, pp. 792 - 799. IEEE Computer Society Press.
[Srikanth87] T.K. Srikanth and S. Toueg. Optimal clock synchronization. Journal of the ACM. Vol. 34, no. 3, pp.626-645, July.1987.
[Shin88] K.G. Shin and P. Ramanathan. Transmission Delays in Hardware Clock Synchronization. IEEE Transactions on Computers. Vol. C-37, No. 11, pp. 1465-1467, Nov. 1988.
[Chapiro84] Daniel M. Chapiro. Globally-Asynchronous Locally-Synchronous Systems. Ph.D. thesis, Stanford University, Oct. 1984.
[Myers01] Chris J. Myers. Asynchronous Circuit Design. John Wiley and Sons, July 2001
[Steininger04] A. Steininger, M. Delvai and W. Huber. Synchronous and Asynchronous Design Methods - A hardware Designer's Perspective. International Conference on Computer Design (ICCD) 2004 (submission).
[Fai04] Fairbanks Scott (GB). Method and apparatus for a distributed clock generator, US patent no. US2004108876,
[Kopetz97] H. Kopetz. Real Time Systems - Design Principles for Distributed Embedded Applications. Kluwer Academic Publishers, Boston 1997.
[Const02] Cristian Constantinescu. Impact of Deep Submicon Technology on Dependability of VLSI Circuits. Proceedings of the International Conference on Dependable Systems and Networks (DSN) 2002. pp. 205-209, June 2002
[ITRS02] International Technology Roadmap for Semiconductors 2001 (http://public.itrs.net)
[Sutherland89] LE. Sutherland. Micropipelines, Communications of the ACM, Vol. 32, No. 6, Jun. 1989, pp. 720-738.
[Salim01] M. Salim Maza and M. Linares Aranda. Analysis of Clock Distribution Networks in the Presence of Crosstalk and Groundbounce. IEEE ICECS. Sep. 2001, pp 773-776.
[Dobberpuhl92] D.W. Dobberpuhl et al. A 200-Mhz 64-b dual issue CMOS microprocessor. IEEE Journal on Solid-State Circuits. Vol.27, pp. 1555-1565, Nov 1992.
[Restle02] J. Phillip Restle, et al. The clock distribution of the Power4 microprocessor. Solid-State Circuits Conference, 2002. ISSCC 2002 IEEE International, Vol. 1, 2002, pp.144-145.
[Chen02] Charlie Chung-Ping Chen and Ed Cheng. Future SOC Design Challenges and Solutions. International Symposium on Quality Electronic Design. pp. 534 - 537, March 2002.
[Friedman01] Eby G. Friedman. Clock Distribution Networks in Synchronous Digital Integrated Circuits. Proceedings of the IEEE. Vol. 89, No. 5, pp. 665 - 692,May 2001.
[Ram90] P. Ramanathan, K. G. Shin and R. W. Butler. Fault-Tolerant Clock Synchronization in Distributed Systems. Computer, Vol. 23, No. 10, pp. 30 - 42, Oct. 1990. IEEE Computer Society Press.
[Lu89] Meiliu Lu, Du Zhang and Tadao Murata. A Design Approach for Self-Diagnosis of Fault-Tolerant Clock Synchronization. IEEE Transactions on Computers. Vol. 38, Issue 9, Sept. 1989, pp.1337 -1341. IEEE Computer Society Press.
[SynUTC02] Martin Horauer, Ulrich Schmid, Klaus Schossmaier, Roland Höller, Nikolaus Kerö. PSynUTC - Evaluation of a High Precision Time Synchronization Prototype System for Ethernet LANs. Proceedings of the 34th {IEEE} Precise Time and Time Interval Systems and Application Meeting (PTTI'02), Reston, Virginia, December 2002, pp. 263-278.
[SSHL97] Klaus Schossmaier, Ulrich Schmid, Martin Horauer, Dietmar Loy. Specification and Implementation of the Universal Time Coordinated Synchronization Unit (UTCSU). Real-Time Systems 12(3), May 1997, pp. 295-327.
[Arteris04] Arteris, Arteris unveis strategy, technology for enableing Network-on-Chip (NoC) design, Press Release March 2004,
[Chelcea00] Tiberiu Chelcea and Steven M. Novick. A Low-Latency FIFO for Mixed-Clock Systems. IEEE Computer Society Workshop on VLSI , April 2000, pp.119 -126.
[Huffman54] D.A. Huffman. The Synthesis of sequential switching circuits. Journal of the Franklin Institute, March/April 1954.
[Hauck95] S.t Hauck.,Asynchronous Design Methodologies: An Overview. Proceedings of the IEEE, Vol. 83, pp. 69 -93, 1995.
[Berkel99] C.H. van Berkel, M. Josephs and S. Nowick. Scanning the Technology: Applications of asynchronous circuits. Proceedings of the IEEE, Vol. 87, pp. 223-233, 1999.
[Gaisler02] Jiri Gaisler. A Portable and Fault-Tolerant Microprocessor Based on the SPARC V8 Architecture., 2002. Proceedings of the International Conference on Dependable Systems and Networks. June 2002, pp. 409 - 415.
[Truong97] T. Kien Truong. Single Chip Fault Tolerant Clock for Integrated Modular Avionics. 16th Digital Avionics Systems Conference (DASC), AIAA/IEEE Vol. 1, Oct. 1997, pp.: 2.1 - 36-44 vol.1
[LL88] J. Lundelius-Welch and N. Lynch. A New Fault-Tolerant Algorithm for Clock Synchronization. Proc. of 3rd ACM Symposium on Principles of Distributed Computing, August 1984, pp. 75-88.
[SIFT78] John H. Wensley et al. SIFT: Design and Analysis of a Fault tolerant Computer for Aircraft Control. Proc. IEEE Vol. 66, Oct 1978.
[Widder04] Josef Widder. Distributed Computing in the Presence of Bounded Asynchrony. Ph. D. thesis, Vienna University of Technology. May 2004.
[DHS86] Danny Dolev, Joseph Y. Halpern and H. Raymond Strong. On the Possibility and Impossibility of Achieving Clock Synchronization". Journal of Computer and System Sciences. Vol. 32, pp.230 250,1986.
[LL84] Jennifer Lundelius-Welch and Nancy A. Lynch. An Upper and Lower Bound for Clock Synchronization. Information and Control. Vol. 62 pp. 190 - 204, 1984.
[WS03] Josef Widder and Ulrich Schmid. Booting Clock Synchronization in Partially Synchronous Systems with Hybrid Node and Link Failures. Technical Report, Nr. 183/1-126, Department of Automation, Vienna University of Technology. January 2003.
[KKMS95] Hermann Kopetz, Andreas Krüger, Dietmar Millinger and Anton Schedl. A Synchronization Strategy for a Time-Triggered Multicluster Real-Time System. Proceedings Reliable Distributed Systems (RDS'95), Sept. 1995, Bad Neuenahr, Germany

## Patentansprüche

1. Verfahren zur verteilten fehlertoleranten Taktgenerierung in Hardware-Systemen, **dadurch gekennzeichnet, daß**
a) der Systemtakt durch mehrere, miteinander kommunizierende fehlertolerante Taktsynchronisationsalgorithmen (TS-Algs) verteilt gebildet wird, indem
i. eine beliebige Anzahl solcher TS-Algs untereinander über ein beliebiges, permanenten und transienten Fehlern unterworfenes Netzwerk (TS-Net) von Taktsignalen Informationen austauschen,
ii. jeder TS-Alg einer oder mehreren Funktionseinheiten (Fu1, Fu2, ...) zugeordnet ist, deren lokalen Takt er erzeugt, wobei die alleinige Auf gabe einer Funktionseinheit (Fu1, Fu2, ...) darin besteht, den verteilten Taktsynchronisationsalgorithmus zu exekutieren,
b) alle lokalen Takte garantiert frequenzsynchron gehalten werden, in dem Sinne, daß je zwei beliebige lokale Taktsignale in einem beliebigen Zeitintervall höchstens um eine gegebene konstante Anzahl von Taktperioden unterschiedlich sind, sodaß aus jedem beliebigen lokalen Takt durch das Nachschalten von Taktumwandlungsschaltungen ein globaler Systemtakt abgeleitet werden kann, der die globale synchrone Kommunikation beliebiger Funktionseinheiten am Chip erlaubt,
c) eine spezifizierte Anzahl von transienten und/oder permanenten Fehlern in den TS-Algs oder im TS-Net auftreten dürfen, ohne die Taktgenerierung und/ oder die Synchronisationsgenauigkeit zu beeinträchtigen.

2. Verfahren nach Anspruch 1, **dadurch gekennzeichnet, daß** die Bereitstellung des globalen Systemtaktes lediglich von dem Verhältnis der maximalen vs. minimalen end-to-end Signalverzögerung der Signalpfade am Chip abhängt, nicht jedoch von deren Maximum.

3. Verfahren nach Anspruch 1 oder 2, **dadurch gekennzeichnet, daß** die Synchronisationsgenauigkeit der bereits aktiven lokalen Takte und somit des davon abgeleiteten globalen Systemtaktes durch Verwendung geeigneter Taktsynchronisationsalgorithmen auch während der Power-Up-Phase der Hardware gewährleistet wird.

4. Verfahren nach einem der Ansprüche 1 bis 3, **dadurch gekennzeichnet, daß** die Implementierung mittels asynchroner Logik erfolgt.

5. Verfahren nach einem der Ansprüche 1 - 4, **dadurch gekennzeichnet, daß** die Stabilität des globalen Systemtaktes durch die Verwendung variabler Verzögerungselemente oder speziellen Taktumwandlungsschaltungen in den TS-Algs erhöht wird, wobei die aktuellen Verzögerungszeiten bzw. Taktkorrekturwerte
• statisch zur Fertigungszeit, und/oder
• für die jeweilige Anwendung des Chips zur Laufzeit konfigurierbar, und/ oder
• automatisch, auf Basis einer einmaligen oder kontinuierlichen Messung von Betriebsparametern ermittelt werden.

6. Verfahren nach einem der Ansprüche 1 bis 5, **dadurch gekennzeichnet, dass** Taktsynchronisationsalgorithmen verwendet werden, welche die Taktsynchronität bereits während des Resets der Funktionseinheiten gewährleisten.

7. Verfahren für die Datenübertragung zwischen verschiedenen Funktionseinheiten eines Hardware-Systems, **dadurch gekennzeichnet, dass** eine Frequenzteilung des basierend auf dem Verfahren nach einem der Ansprüche 1 - 6 verteilt generierten Taktes durchgeführt wird.

8. Hardware-System zum Durchführen eines Verfahrens nach einem der Ansprüche 1 bis 7, umfassend zwei oder mehr Funktionseinheiten (Fu1, Fu2, ...), wobei der Systemtakt durch mehrere, miteinander kommunizierende fehlertolerante Taktsynchronisationsalgorithmen (TS-Algs) ohne Verwendung externer oder interner Taktoszillatoren verteilt gebildet wird, indem eine beliebige Anzahl solcher TS-Algs untereinander über ein beliebiges, permanenten und transienten Fehlern unterworfenes Netzwerk (TS-Net) von Taktsignalen Informationen austauschen, und jeder TS-Alg einer oder mehreren Funktionseinheiten (Fu1, Fu2, ...) zugeordnet ist, deren lokalen Takt er erzeugt, wobei die alleinige Aufgabe einer Funktionseinheit (Fu1, Fu2, ...) darin besteht, den verteilten Taktsynchronisationsalgorithmus zu exekutieren.

## Claims

1. Procedure for distributed fault-tolerant clock generation in hardware systems, **characterised in that**
a) the system clock is built distributed over several fault-tolerant clock synchronisation algorithms (TS-Algs), **in that**
i. a certain of such TS-Algs exchange information with each other over a network (TS-Net) of clock signals subjected to arbitrary, permanent and transient faults,
ii. one or several functional units (Fu1, Fu2, ...) are allocated to each TS-Alg, which in turn triggers their local clock, whereby the sole task of a functional unit (Fu1, Fu2, ...) consists in executing the distributed clock synchronisation algorithms,
b) all local clocks are held to guaranteed frequency synchronicity, in the sense that any two local clock signals differ at most by a given constant number of clock periods in a certain time interval, so that a system clock, which enables global synchronous communication of arbitrary functional units on the chip, can be derived from every arbitrary local clock by the downstream connection of clock transformation circuits,
c) a specified quantity of transient and/or permanent faults in the TS-Algs or in the TS-Net may arise without affecting the clock generation and/or the precision of synchronisation.

2. Procedure according to claim 1, **characterised in that** the preparation of the global system clock depends solely on the relationship of the maximal vs. minimal end-to-end signal delay of the signal paths on the chip, but not on its maximum.

3. Procedure according to claim 1 or 2, **characterised in that** the precision of synchronisation of the local clocks already activated, and so of the global system clock derived from it, is guaranteed by the use of suitable clock synchronisation algorithms even during the power up phase of the hardware.

4. Procedure according to one of the claims 1 to 3, **characterised in that** the implementation takes place by means of asynchronous logic.

5. Procedure according to one of the claims 1 - 4, **characterised in that** the stability of the global system clock is raised by the use of variable delay elements or special clock transformation circuits in the TS-Algs, whereby the current delay times or rather clock adjustment values are determined
• statically for the processing time, and/or
• configurable for the use of the chip over the running period in each case, and/or
• automatically on the basis of a unique or continual measurement of operational parameters.

6. Procedure according to one of the claims 1 to 5, **characterised in that** clock synchronisation algorithms are used which already guarantee the clock synchronicity during the resetting of the functional units.

7. Procedure for the data transfer between various functional units of a hardware system, **characterised in that** a frequency distribution of the generated clock based on the procedure according to one of the claims 1 - 6 is carried out.

8. Hardware system for carrying out a procedure according to one of the claims 1 to 7, comprising two or more functional units (Fu1, Fu2, ...), whereby the system clock is built distributed over several fault-tolerant clock synchronisation algorithms (TS-Algs) communicating with each other without the use of external or internal clock oscillators, as a certain number of such TS-Algs exchange clock signal information over an arbitrary network (TS-Net) subjected to permanent and transient faults, and one or several functional units (Fu1, Fu2, ...) is allocated to every TS-Alg, which triggers their local clock, whereby the sole task of a functional unit (Fu1, Fu2, ...) consists in executing the distributed clock synchronisation signal algorithm.

## Revendications

1. Procédé pour la génération de rythme répartie et tolérante aux erreurs dans des systèmes de matériel, **caractérisé en ce que**
a) le rythme du système est formé de façon répartie par plusieurs algorithmes de synchronisation de rythme (TS-Algs) tolérants aux erreurs et communiquant entre eux, du fait que
i. un nombre quelconque de tels TS-Algs échange des informations entre eux par un réseau (TS-Net) quelconque, soumis à des erreurs permanentes et des erreurs passagères, de signaux de rythme,
ii. chaque TS-Alg est attribué à une ou plusieurs unités fonctionnelles (Fu1, Fu2, ...), dont il génère le rythme local, sachant que l'unique fonction d'une unité fonctionnelle (Fu1, Fu2,...) consiste à exécuter l'algorithme réparti de synchronisation de rythme,
b) tous les rythmes locaux sont maintenus garantis synchrones en fréquence, en ce sens que à chaque fois deux signaux de rythme locaux quelconques sont différents dans un intervalle de temps quelconque au maximum d'un nombre constant donné de périodes de rythme, de sorte que, à partir de tout rythme local quelconque, on peut déduire par le branchement en aval de circuits de conversion de rythme un rythme global de système qui permet la communication synchrone globale d'unités fonctionnelles quelconques sur la puce,
c) un nombre spécifié d'erreurs passagères et/ou permanentes peut apparaître dans les TS-Algs ou sur le TS-Net sans altérer la génération de rythme et/ou la précision de synchronisation.

2. Procédé selon la revendication 1, **caractérisé en ce que** la mise à disposition du rythme global du système dépend uniquement du rapport entre les temporisations de signal end-to-end maximale et minimale des chemins de signal sur la puce, mais pas de leur maximum.

3. Procédé selon la revendication 1 ou 2, **caractérisé en ce que** la précision de synchronisation des rythmes locaux déjà actifs et donc du rythme global du système qui en est déduit est garantie par l'utilisation d'algorithmes appropriés de synchronisation de rythme même pendant la phase de mise sous tension du matériel.

4. Procédé selon l'une quelconque des revendications 1 à 3, **caractérisé en ce que** l'implémentation s'effectue au moyen de logique asynchrone.

5. Procédé selon l'une quelconque des revendications 1 à 4, **caractérisé en ce que** la stabilité du rythme global du système est augmentée par l'utilisation d'éléments de temporisation variables ou de circuits spéciaux de conversion de rythme dans les TS-Algs, les temporisations ou valeurs de correction de rythme actuelles
- étant déterminées de façon statique pour le temps de production et/ou
- de façon configurable pour l'application respective de la puce pour le temps de propagation, et/ou
- de façon automatique, sur la base d'une mesure unique ou continue de paramètres de service.

6. Procédé selon l'une quelconque des revendications 1 à 5, **caractérisé en ce que** des algorithmes de synchronisation de rythme sont utilisés, lesquels garantissent le synchronisme du rythme déjà pendant la réinitialisation des unités fonctionnelles.

7. Procédé pour la transmission de données entre diverses unités fonctionnelles d'un système de matériel, **caractérisé en ce qu'**une division de fréquence du rythme généré de façon répartie sur la base du procédé selon l'une quelconque des revendications 1 à 6 est effectuée.

8. Système de matériel pour la mise en oeuvre d'un procédé selon l'une quelconque des revendications 1 à 7, comprenant deux ou plus de deux unités fonctionnelles (Fu1, Fu2, ...), le rythme du système étant formé de façon répartie par plusieurs algorithmes de synchronisation de rythme (TS-Algs) tolérants aux erreurs et communiquant entre eux sans l'utilisation d'oscillateurs de rythme externes ou internes du fait qu'un nombre quelconque de tels TS-Algs échange des informations entre eux au moyen d'un réseau (TS-Net) quelconque, soumis à des erreurs permanentes et des erreurs passagères, de signaux de rythme, et chaque TS-Alg est attribué à une ou plusieurs unités fonctionnelles (Fu1, Fu2,..), dont il génère le rythme local, l'unique fonction d'une unité fonctionnelle (Fu1, Fu2,...) consistant à exécuter l'algorithme réparti de synchronisation de rythme.
